# EUROPÄISCHE PATENTSCHRIFT

(11) **EP 4 078 921 B1**
(45) Veröffentlichungstag und Bekanntmachung des Hinweises auf die Patenterteilung: **06.12.2023**
(21) Anmeldenummer: 20835748.3
(22) Anmeldetag: 16.12.2020
(51) Int. Cl.: H04L 9/40, H04J 3/06, H04L 43/0852, H04L 47/283

(54) **VERFAHREN ZUR ABSICHERUNG DER ZEITSYNCHRONISATION EINES ETHERNET-BORDNETZES**
METHOD FOR SECURING THE TIME SYNCHRONIZATION OF AN ETHERNET ON-BOARD NETWORK
PROCÉDÉ DE SÉCURISATION DE LA SYNCHRONISATION TEMPORELLE D'UN RÉSEAU EMBARQUÉ ETHERNET

(30) Priorität: 18.12.2019 DE 102019220096
(43) Veröffentlichungstag der Anmeldung: 26.10.2022
(73) Patentinhaber: Continental Automotive Technologies GmbH, 30165 Hannover (DE)
(72) Erfinder: ZINNER, Helge, 60488 Frankfurt am Main (DE)
(74) Vertreter: Continental Corporation
(86) Internationale Anmeldenummer: PCT/EP2020/086467
(87) Internationale Veröffentlichungsnummer: WO 2021/122778

(56) Entgegenhaltungen:
- DE-A1-102015 206 169
- DE-B3-102018 205 264
- DE-B4-102012 216 689

## Beschreibung

### Feld

Die vorliegende Erfindung betrifft Kommunikationsnetzwerke mit miteinander synchronisierten Netzwerkgeräten.

### Hintergrund

Automobilhersteller (OEM's) und Tier-1-Zulieferer der Automobilindustrie bereiten die nächste Generation der Architektur für Fahrzeugsteuerungen oder elektronische Steuergeräte / Steuereinheiten, ECU's, vor. Eine Entwicklung ist die so genannte "Zonenorientierte Architektur", bei der Steuergeräte in Zonen gruppiert werden, wie z.B. eine vordere rechte Türzone. Ein Unterschied zu früheren Architekturen besteht darin, dass sich die Controller an bestimmten physikalischen oder räumlichen Positionen befinden, um die Daten der dort positionierten Sensoren optimal zu erfassen. So kann beispielsweise eine Steuereinheit, das Daten von einem Sensor in der rechten Vordertür sammelt, in der rechten Vordertürzone positioniert werden.

Ebenfalls in Betracht gezogen wird die Lokalisierung oder Verteilung der Softwareausführung für Features und Anwendungen auf andere Controller und Prozessoren. Eine solche Lokalisierung oder Verteilung kann Teil einer Optimierung sein und auch im Falle eines Fehlers oder eines Ausfalls, z.B. eines Steuergeräts, eingesetzt werden. Diese Lokalisierung oder Verteilung wird als dynamische Migration oder einfach als Migration bezeichnet. Die Serienproduktion für die dynamische Migration von Software auf andere Steuergeräte/Prozessoren innerhalb des Fahrzeugs wird in Kürze erwartet.

Ethernet kann das Netzwerk der Wahl für den Anschluss von Steuergeräten in einem Netzwerk sein. Die Ethernet-Technologie wird immer beliebter für die elektrischen Systeme von Fahrzeugen und Zulieferprodukten. Der Einsatz der Ethernet-Technologie erfordert ein effektives Synchronisationskonzept.

Bestehende Ethernet-Systeme können eine Implementierung des Zeitsynchronisationsstandards IEEE 802.1AS verwenden. Zwei Varianten, die besondere Aufmerksamkeit erregt haben, sind die Auswahl der 802.1AS-Rev und der Zeitbereich der 802.1 AS-Rev, wobei letzterer eine zwingende Voraussetzung für die erste ist. Weitere Protokolle außerhalb der physikalischen Übertragungsstandards sind Ethernet AVB und sein Nachfolger Ethernet TSN. Ethernet AVB wurde bereits für Automobile in der Serienproduktion eingeführt. Ein wesentlicher Substandard für Ethernet TSN und AVB ist der Zeitsynchronisationsstandard IEEE802.1AS, der vom Hauptstandard IEEE 802.1 für Higher Layer LAN Protokolle (Bridging) abhängig ist. Beide Standards nutzen das Precision Time Protocol (PTP) der IEEE 1588, um eine gemeinsame Zeitbasis in einem Ethernet-Netzwerk zu etablieren,

Ethernet-Verbindungen unterstützen auf dem Layer 3 des OSI-Schichtenmodells eine Vielzahl von Vermittlungsprotokollen für die Übertragung von Datenpaketen zwischen Sendern und Empfängern. In den höheren Protokollschichten erfolgt die Segmentierung des Datenstroms in Pakete, die Prozesskommunikation zwischen miteinander kommunizierenden Systemen, die Übersetzung von Daten in eine systemunabhängige Form und schließlich die Bereitstellung von Funktionen für Anwendungen.

Fast alle in Fahrzeugen eingesetzten Ethernet-Kommunikationsnetzwerke nutzen ein Protokoll zur Zeitsynchronisation, das eine in allen Netzwerkgeräten synchrone globale Zeitbasis des Netzwerks bereitstellt. Es wird erwartet, dass der Verbreitungsgrad zeitlich synchronisierter Netzwerkgeräte in Zukunft weiter zunimmt.

Der IEEE 802.1AS-Standard stellt ein solches Protokoll zur Zeitsynchronisation bereit. Ausgehend von einer sogenannten "besten Uhr" im Netzwerk, auch als Grandmaster oder Grandmaster Clock bezeichnet, wird eine Master-Slave-Uhrenhierarchie aufgebaut. Der Grandmaster stellt dabei die Zeitbasis für das Netzwerk bereit, auf die alle anderen Netzwerkgeräte des Netzwerks sich synchronisieren. Der Grandmaster wird mittels des sogenannten Best Master Clock Algorithmus (BMCA) bestimmt und innerhalb des Netzwerks bekanntgegeben. Dazu senden IEEE 802.1AS-fähige Netzwerkgeräte Announce-Nachrichten mit Informationen über ihre interne Uhr an unmittelbar angeschlossene weitere Netzwerkgeräte. Die Informationen über die internen Uhren geben Aufschluss auf die Genauigkeit der jeweiligen Uhr, deren Bezug oder Zeitreferenz sowie andere Eigenschaften, anhand derer die beste Uhr in dem Netzwerk bestimmt werden kann. Ein Empfänger einer solchen Announce-Nachricht vergleicht die empfangenen Informationen mit den Merkmalen seiner eigenen internen Uhr und evtl. bereits von einem anderen Port empfangenen Nachrichten mit Informationen zu Uhren anderer Netzwerkgeräte, und akzeptiert eine in einem anderen Netzwerkgerät befindliche Uhr, wenn diese bessere Uhrenparameter hat. Nach kurzer Zeit ist die beste Uhr in dem Netzwerk ermittelt, die dann der Grandmaster in dem Netzwerk wird. Ausgehend von dem Grandmaster werden Nachrichten zur Zeitsynchronisation über das Netzwerk verbreitet. Ein Netzwerkgerät das eine Nachricht zur Zeitsynchronisation empfängt leitet diese nicht einfach weiter, sondern korrigiert die Zeitinformation um die zuvor ermittelte Laufzeit auf der Verbindung, über die es Nachrichten zur Zeitsynchronisation von einem direkt verbundenen Netzwerkgerät empfängt, sowie um die interne Bearbeitungsdauer, bevor es die Nachricht zur Zeitsynchronisation mit der korrigierten Zeitinformation weitersendet.

Bei der Uhrenhierarchie gemäß IEEE 802.1AS und dem darin festgelegten "generalized precision time protocol" (gPTP) stellt immer nur ein einziges Netzwerkgerät die beste Uhr des Netzwerkes bereit. Dieses Netzwerkgerät steuert und regelt somit die gesamte Zeit des Fahrzeugs. Alle anderen Uhren in Netzwerkgeräten des Netzwerkes richten sich ausschließlich nach dieser einen Uhr. Einige Fahrzeughersteller synchronisieren sogar Netzwerke anderer Standards, bspw. CAN, über diesen Ethernet-Zeitmaster, so dass fast allen Netzwerkgeräten des Fahrzeugs von dem den Grandmaster bereitstellenden Netzwerkgerät die Systemzeit mitgeteilt wird. Dadurch ist in dem Netzwerk bzw. dem Fahrzeug ein einzelnes Netzwerkgerät als Single Point of Failure festgelegt, dessen Ausfall oder Manipulation gravierende Auswirkungen auf die Betriebssicherheit des Fahrzeugs haben kann. So müssen bspw. in Fahrzeugen mit einem hohen Grad an Fahrerunterstützung durch entsprechende Systeme oder mit Systemen für das (Teil-)Autonome Fahren eine Vielzahl von innerhalb eines engen Zeitfensters erfassten Sensordaten gemeinsam verarbeitet werden, um entsprechende Ansteuersignale für Aktoren des Fahrzeugs abzuleiten. Auch für Dokumentationszwecke kann eine möglichst genaue Zeiterfassung von Sensordaten von großer Bedeutung sein, bspw. bei der Speicherung in Log-Dateien, durch deren Analyse Fehlfunktionen oder Fehlbedienungen rekonstruiert werden können. Letzteres ist insbesondere für Versicherungen und Strafverfolgungsbehörden von hohem Interesse. Daher ist eine sichere synchronisierte Bereitstellung der Zeitinformation unverzichtbar.

Die DE 10 2012 216 689 B4 schlägt zur Erkennung von Angriffen dieser Art vor, Laufzeiten von Nachrichten zur Zeitsynchronisation innerhalb des Kommunikationsnetzes zu überwachen. Ein zwischen zwei Netzwerkgerät geschaltetes zusätzliches Netzwerkgerät, das Nachrichten abfängt und weiterleitet wird die Laufzeit der Nachrichten zwangsläufig verändern, selbst wenn die weitergeleitete Nachricht nicht verändert wird.

Auch am Beispiel beim Einsatz von AUTOSAR Überlegungen werden fast alle Daten, die zwischen den Steuereinheiten ausgetauscht werden, mittels IP, somit der IP-Schicht, übertragen, d.h. dass alle Merkmale und Dienste der IP-Schicht genutzt werden. Hier liegt der Focus auf IP-Sec. IPsec, deren Kurzform für Internet Protocol Security steht, ist eine Protokoll-Suite, die eine gesicherte Kommunikation über IP-Netze ermöglichen soll. Das Ziel ist es, eine verschlüsselungsbasierte Sicherheit auf Netzwerkebene bereitzustellen. IPsec bietet durch die verbindungslose Integrität sowie die Zugangskontrolle und Authentifikation der Daten diese Möglichkeit an. Zudem wird durch IPsec die Vertraulichkeit sowie Authentizität der Paketreihenfolge durch Verschlüsselung gewährleistet.

Die Zeitsynchronisation, wie am Beispiel von gPTP bzw. 802.1AS ersichtlich ist, wird nicht über die IP-Schicht übertragen, sondern sie ist im Fahrzeug noch nicht geschützt. Vergleichbare Protokolle wie IPSec gibt es auf den unteren Schichten heute noch nicht im Automobil bzw. würde zu viel höheren Kosten führen bspw. MACSEC. Generell werden die Nachrichten mittels Ethernet transportiert. Ethernet ist hier das eigentliche Transportprotokoll, d.h. die Nachrichten werden nicht über die IP Schicht transportiert. Die dort implementieren und vorhandenen Schutzmechanismen können nicht verwendet werden.

Somit bieten heutigen Verfahren und Protokolle zur Zeitsynchronisation keine einfachen Möglichkeiten zum Schutz. Jedes Netzwerkgerät kann aus den als einfache Multicast Ethernet-Frames an mehrere oder alle Netzwerkgeräte des Netzwerks gesendeten Nachrichten zur Zeitsynchronisation einfach ableiten, welches Netzwerkgerät in dem Netzwerk der Grandmaster ist. Schutzmechanismen auf höheren Protokollschichten wie etwa IPSEC oder TLS und dergleichen können auf dieser Ebene noch nicht greifen. Zum anderen, wenn die Zeitsynchronisationsnachrichten über IP gesendet werden, geht die Genauigkeit der Uhrensynchronisation resp. der eigentlichen Datenfusion verloren. Die Manipulation kann schwerwiegende Auswirkungen haben, wenn bspw. Daten zur Sensorfusion verändert werden und Daten von z.B. einer Kamera und eines Radars fusioniert werden, welche aber nicht zusammengehören.

Aus dem Stand der Technik sind einige Ansätze zur Erkennung von Änderungen der Konfiguration oder Struktur eines Kommunikationsnetzwerks unter Nutzung der Zeitsynchronisation des Netzwerks bekannt. Eine unautorisierte Änderung der Konfiguration des Netzwerks kann bspw. das Zwischenschalten eines Netzwerkgeräts zur Vorbereitung eines Angriffs umfassen, das Nachrichten zur Analyse abfängt und ggf. veränderte Nachrichten weitersendet. Dies kann dazu genutzt werden, den sicheren und ordnungsgemäßen Betrieb zu verhindern oder zumindest zu stören.

Die Patentanmeldung DE102018205264 ist weiterer Stand der Technik.

Es ist daher eine Aufgabe der Erfindung, ein Verfahren, ein das Verfahren implementierendes Steuergerät und ein Bordnetzwerk anzugeben, welche einen verbesserten Schutz der Zeitsynchronisation gewährleisten.

Diese Aufgabe wird durch das in Anspruch 1 angegebene Verfahren und die im Anspruch 11 angegebene Steuereinheit, gelöst. Ausgestaltungen und Weiterentwicklungen sind in jeweiligen abhängigen Ansprüchen angegeben.

In einer Ausgestaltung des Verfahrens zur Absicherung der Zeitsynchronisation eines Ethernet-Bordnetzes 2 eines Kraftfahrzeugs 1, werden folgende Schritte durchgeführt werden:
- Bestimmen einer Laufzeit 9 eines ersten Signals 10 auf einem ersten Verbindungsweg 6 zwischen einer ersten Steuereinheit 3 des Ethernet-Bordnetzes 2 und einer zweiten Steuereinheit 4 des Ethernet-Bordnetzes 2;
- Bestimmen einer Maximalgeschwindigkeit 11 des ersten Verbindungswegs 6 anhand der Laufzeit 9; und
- Bestimmen einer Art eines Übertragungsmediums 12 des ersten Verbindungswegs 6 anhand der Maximalgeschwindigkeit 11,

Hierbei wird durch die Bestimmung der Laufzeit 9 eines ersten Signals 10 und der Bestimmen der Maximalgeschwindigkeit 11 des ersten Verbindungswegs und die Bestimmung der Art eines Übertragungsmediums 12 des ersten Verbindungswegs 6 eine Entropiequelle gebildet, aus der mindestens ein dynamischer Schlüssel 28 für den Verbindungsweg 6 ermittelt wird, der zur Verschlüsselung einer Zeitsynchronisationsnachrichten für den Verbindungsweg 6 eingesetzt wird.

In einer weiteren Ausgestaltung des Verfahrens wird der der dynamischer Schlüssel 28 für den Verbindungsweg 6 in der Form gebildet, dass dieser einmalig pro Zeiteinheit und für jeden Link und im Ethernet-Bordnetzwerk einmalig ist.

Eine weitere Ausgestaltung der Erfindung zeichnet sich dadurch aus, dass eine Generierung des dynamischer Schlüssel 28 für den Verbindungsweg 6 durch die Kombination einer Punkt-zu-Punkt-Leitungsverzögerung und der Nachrichtenfrequenz erfolgt.

Eine weitere Ausgestaltung der Erfindung zeichnet sich dadurch aus, dass die Art des Übertragungsmediums 12 einem Programm 13 im Ethernet-Bordnetz 2 mitgeteilt wird und eine Verbindungswegwahl 14 des Programms 13 abhängig von der Art des Übertragungsmediums 12 angepasst wird und das Programm 13 sämtliche Information der Entropiequelle aufnimmt und die Generierung des dynamischer Schlüssel 28 für den Verbindungsweg 6 erfolgt.

Bei einer weiteren Ausgestaltung des Verfahrens wird die Art des Übertragungsmediums 12 als optisch, Kupfer oder drahtlos bestimmt.

Eine weitere Ausgestaltung des Verfahrens zeichnet sich dadurch aus, dass dem ersten Verbindungsweg 6 anhand der Art des Übertragungsmediums 12 ein Übertragungssicherheitswert 15, welcher eine Verlustwahrscheinlichkeit von über den ersten Verbindungsweg 6 übertragenen Daten beschreibt, zugewiesen wird.

Eine weitere Ausgestaltung des Verfahren zeichnet sich dadurch aus, dass eine Laufzeiten von einer Mehrzahl von Signalen auf dem ersten Verbindungsweg 6 bestimmt werden und die schnellste Laufzeit der Mehrzahl der Signale ausgewählt wird, wobei die Maximalgeschwindigkeit 11 des ersten Verbindungswegs 6 anhand der schnellsten Laufzeit bestimmt wird.

Eine weitere Ausgestaltung des Verfahren zeichnet sich dadurch aus, dass eine Laufzeit 16 eines zweiten Signals 17 auf einem vom ersten Verbindungsweg 6 unterschiedlichen zweiten Verbindungsweg 7 zwischen der ersten Steuereinheit 3 und der zweiten Steuereinheit 4 bestimmt wird, und eine Maximalgeschwindigkeit 11 des zweiten Verbindungswegs 7 bestimmt wird, wobei eine Art des Übertragungsmediums 19 des zweiten Verbindungswegs 7 anhand der Maximalgeschwindigkeit 11 des zweiten Verbindungswegs 7 bestimmt wird.

Eine weitere Ausgestaltung des Verfahrens zeichnet sich dadurch aus, dass das Verfahren nach einem Wechsel der ersten Steuereinheit 3 von einem Normalbetriebsmodus in einen Energiesparmodus und/oder vom Energiesparmodus in den Normalbetriebsmodus ausgeführt wird.

In einer weiteren Ausgestaltung wird die Laufzeit 9 des ersten Signals 10 mit der ersten Steuereinheit 3 bestimmt und eine Laufzeit 21 eines dritten Signals 22 auf einem nur indirekt mit der ersten Steuereinheit 3 verbundenen dritten Verbindungsweg 8 zwischen der zweiten Steuereinheit 4 und einer dritten Steuereinheit 5 des Ethernet-Bordnetzes 2 mit der dritten Steuereinheit 5 bestimmt, wobei die Bestimmung der Laufzeit 21 des dritten Signals 22 durch eine von der ersten Steuereinheit 3 an die dritte Steuereinheit 5 gesendete Dienstnachricht 20 ausgelöst wird.

Die Ausgestaltung der Steuereinheit für ein Ethernet-Bordnetz 2, welche als erste Steuereinheit 3 dazu ausgebildet ist:
- ein Signal 10 an eine zweite Steuereinheit 4 des Ethernet-Bordnetzes 2 zu senden und das Signal 10 von der zweiten Steuereinheit 4 zu empfangen;
- eine Laufzeit 9 des Signals 10 auf einem Verbindungsweg 6 zur zweiten Steuereinheit 4 zu bestimmen;
- eine Maximalgeschwindigkeit 11 des Verbindungswegs 6 anhand der Laufzeit 9 zu bestimmen; und
- eine Art eines Übertragungsmediums 12 des Verbindungswegs 6 anhand der Maximalgeschwindigkeit 11 zu bestimmen,
wobei die Steuereinheit 3 mindestens
- eine Mikroprozessor 402,
- einen flüchtigen Speicher 404 und nichtflüchtigen Speicher 406,
- mindestens zwei Kommunikationsschnittstellen 408,
- einen synchronisierbaren Zeitgeber 410 umfasst,
und der nichtflüchtige Speicher 406 Programminstruktionen enthält die, wenn sie von dem Mikroprozessor 402 ausgeführt werden, zumindest eine Ausgestaltung des erfindungsgemäßen Verfahrens nach Anspruch 1 bis 10 implementieren und die Entropiequelle im flüchtigen und/oder nichtflüchtigen Speicher 404, 406 gebildet wird, aus der die dynamischen Schlüssel 28 für die Verbindungswege 6 gebildet werden.

Eine Ausgestaltung des Ethernet-Bordnetzes 2 für ein Kraftfahrzeug 1, mit einer ersten Steuereinheit 3 und einer zweiten Steuereinheit 4, wobei die Steuereinheiten 3, 4 über zumindest einen Verbindungsweg 6, 7 miteinander verbunden sind, und die erste Steuereinheit 3 gemäß Anspruch 11 ausgebildet ist.

Eine weitere Ausgestaltung des Ethernet-Bordnetz zeichnet sich dadurch aus, dass das Ethernet-Bordnetz 2 eine dritte Steuereinheit 5 aufweist, welche nur indirekt mit der ersten Steuereinheit 3 verbunden ist und über einen dritten Verbindungsweg 8 direkt mit der zweiten Steuereinheit 4 verbunden ist, wobei die dritte Steuereinheit 5 dazu ausgebildet ist, eine Laufzeit 21 eines dritten Signals 22 auf dem dritten Verbindungsweg 8 zu bestimmen, wobei die erste Steuereinheit 3 dazu ausgebildet ist, die Bestimmung der Laufzeit 21 des dritten Signals 22 durch eine Dienstnachricht 20 an die dritte Steuereinheit 5 auszulösen.

Eine Ausgestaltung wird durch ein Computerprogrammprodukt wiedergegeben. Hierbei umfasst das Computerprogrammprodukt Befehle, die bei der Ausführung des Programms durch einen Computer diesen veranlassen, das Verfahren 200 nach einem oder mehreren der Ansprüche 1 - 10 auszuführen.

Eine Ausgestaltung erfolgt auf einem Computerlesbareres Medium, auf dem das Computerprogrammprodukt nach Anspruch 12 gespeichert ist.

Eine Ausgestaltung erfolgt in einem Fahrzeug mit mehrere Steuereinheiten 3, 4, 5 nach Anspruch 12 umfassenden Ethernet-Bordnetzes.

Durch die Erfindung wird die Security im Bereich von Ethernet erhöht und somit Sicherheitslücken geschlossen. Des Weiteren wird ein standardisierbarer Ansatz angegeben, der den Einsatz von Ethernet in Fahrzeugen für Automotive erleichtert.

Bei diesem Verfahren ermitteln die Steuereinheit eine Laufzeit für die Datenübermittlung über das Bordnetzwerk zu einer zweiten Steuereinheit. Wichtig ist, dass die Ermittlung der Laufzeit in irgendeiner Form auf der Basis einer tatsächlichen physischen Gegebenheit des Übertragungsweges von der ersten Steuereinheit zur zweiten Steuereinheit erfolgt, d.h., dass es eine physische Gegebenheit oder Eigenschaft des Übertragungsweges gibt, deren Änderung zu einer Änderung der ermittelten Laufzeit führt. Auf Basis der Leitungsverzögerung und der Nachrichtenfrequenz wird ein individueller und sich ständig veränderter Schlüssel generiert.

Dieser Schlüssel ist einmalig pro Zeiteinheit und auch pro Link unterschiedlich und es gibt keinen Schlüssel zweimal im Netzwerk

Mit anderen Worten die Zeitsynchronisationsnachrichten werden mit einem dynamischen Schlüssel verschlüsselt, welcher sich aus individuellen Parametern zum Verbindungspartner ableiten lässt, die eine Entropiequelle bilden.

Durch die Generierung des Schlüssels aus der Kombination von Punkt-zu-Punkt-Leitungsverzögerung und der Frequenz des Quarzes wird der Schlüssel besonders resistent gegen Umgehungsversuche da sich zum einen der Schlüssel ständig verändert und zum anderen auf jedem Link im Fahrzeugnetzwerk unterschiedlich sein wird. Die beiden Werten können entweder direkt in Kombination verwendet werden oder noch um andere statische Werte, welche beiden Steuergeräten bzw. Steuereinheiten bekannt sein müssen und, wie bspw. die Adresse, erweitert werden, um die Schlüssel zu generieren.

Die Berücksichtigung der zuvor ermittelten Laufzeit und der Nachrichtenfrequenz ist in diesem Zusammenhang eine Entropiequelle, die die Sicherheit weiter erhöht. Typische Zufallsgeneratoren für Computer und insbesondere für Embedded-Systeme oder Netzwerkkomponenten sind keine "echten" Zufallsgeneratoren in dem Sinne, dass ein nicht deterministischer physikalischer Prozess, wie beispielsweise elektronisches Rauschen oder radioaktiver Zerfall, in ein digitales Signal umgesetzt wird. Vielmehr kommen hier Pseudo-Zufallsgeneratoren zum Einsatz. Diese Generatoren erzeugen ausgehend von einer Initialisierung in deterministischer Weise Zahlenfolgen und sind für die Initialisierung häufig auch auf quasizufällige Systemereignisse angewiesen.

Den durch das Verfahren bereitgestellten Effekt, nämlich den Schutz gegen unbefugtes Abhören, Verfälschen der Kommunikation und gegen den Austausch von Geräten, kann man auch auf andere Weise und mit noch höherem Sicherheitsniveau erzielen, beispielsweise durch den Einsatz von Hardware-Verschlüsselung bedienen, die auf der Steuereinheit oder dem Bordnetzwerk zum Einsatz kommt.

Im Fahrzeug ist es hingegen in der Regel nicht wirtschaftlich, allen mit dem Netzwerk verbundenen Teilnehmern eine für lückenlos verschlüsselte Kommunikation ausreichende Hardwareausstattung auszustatten. Das beschriebene Verfahren setzt deutlich geringere Hardwareressourcen voraus und kann mit vorhandenen Implementierungen umgesetzt werden und steigert somit das Sicherheitsniveau deutlich, ohne dass dies zwangsläufig mit höheren Herstellungskosten für das Bordnetzwerk oder daran angeschlossene Geräte gekoppelt wäre.

Wie zuvor beschrieben, ist ein wesentlicher Vorteil des Verfahrens, dass es sich auch ohne den Einsatz zusätzlicher Hardware die vom ersten Teilnehmer zum zweiten Teilnehmer führende Leitung als Mittel zur hardwaremäßigen Erzeugung von Entropie für die zufällige Erstellung der Zeitverschlüsselung zu Nutze machen kann. Dieses Verfahren kann insbesondere in Form einer Software implementiert sein, die als Update oder Upgrade zu bestehender Software oder Firmware von Teilnehmern am Netzwerk vertrieben werden kann und insofern eine eigenständige Lösung darstellt.

In vorteilhafter Weise kann durch die Erfindung die Güte der Ausführung von Software-basierenden Anwendungen (z. B. Automatisiertes Fahren) erhöht werden, insbesondere ohne finanziellen Mehraufwand. Das erfindungsgemäße Bordnetzwerk ist im Hinblick auf Kosten und Zuverlässigkeit verbessert. Hierdurch kann durch softwarebasierte Verfahren die Metainformation aus den Steuereinheiten oder dem Bordnetzwerk generiert, um hieraus dann eine höhere Funktionalität zu schaffen.

In vorteilhafter Weise kann durch die Erfindung die Sicherheit eines Fahrzeugnetzwerks signifikant und sehr einfach erhöht werden. Mit der Nutzung des neu eingeführten Ethernet-Protokolls im Automobil sind Mechanismen notwendig, die sich einfache Techniken und gegebene Eigenschaften von Technologien zu Nutze machen, um auf teure Implementierungen und weitere zusätzliche Hardware verzichten zu können. Durch frühzeitigere Erkennung von Angriffen und Fehlverhalten mittels der frühen Analyse der Kommunikationspfade lassen sich Lücken und Fehler vor der Auslieferung des Fahrzeugs erkennen. Das erfindungsgemäße Bordnetzwerk ist im Hinblick auf Kosten und Zuverlässigkeit verbessert. Die Testbarkeit des Bordnetzwerk wird durch die Erfindung klarer definiert und dadurch können Testkosten gespart werden. Zudem bietet die Erfindung eine transparente Sicherheitsfunktionalität.

Durch das vorgestellte Verfahren ist sichergestellt, dass jeder Link im Fahrzeug und damit auch jeder Link in jedem Fahrzeug weltweit eine unterschiedliche Verschlüsselung aufweist. Das Bordnetzwerk ist damit deutlich sicherer als vergleichbare Systeme, da der Schlüssel sich ständig verändert und zusätzlich auf einer sicheren Entropiequelle basiert.

Durch die Erfindung wir eine Erhöhung der Qualität von verteilten Anwendungen wie bspw. Sensorfusion ermöglicht. Als Vorteil aus der anwendungsspezifischen Bestimmung einer besseren Uhr ergibt sich eine Verbesserung der Zeitsynchronisation für die gewählte Anwendung. Dadurch kann die maximale mögliche Genauigkeit aus diesem Protokoll, oder ähnlichen Protokollen, welche nur einen zeitgebenden Knoten haben, erreicht werden. Hierdurch ergeben sich genauere Synchronisationen, wodurch auf teurere Quarze und Komponenten verzichten werden kann. Dies kann auch Auswirkungen auf sonst benötigte Pufferspeicher haben, auf die dann verzichtet werden kann oder kleiner ausgelegt wird. Fusionen von verschieden Daten, wie bspw. Kamera und Radar können hiermit verbessert und genauer ausgelegt werden. Weiterhin kann das Loggen von Daten noch präziser gestaltet werden.

Durch die Erfindung wird eine plattformunabhängige Software mit höherer Qualität erzielt. Mit diesem Verfahren lässt sich die Software flexibler gestalten und vorteilhaft Information aus dem darunter liegenden System nutzen ohne es vorher fix in die Software programmiert zu haben. Die Erfindung erlaubt es den Softwareentwicklern und -Architekten eine Software/Anwendung anzubieten, welche flexibler und präziser auf die Anforderungen des Anwendungsfalles zugeschnitten werden kann. Durch den Einbau der genannten Verfahren in Software kann jeweils oder innerhalb des Steuergerätes eine Optimierung erfolgen. Dies bedeutet, dass Software plattformunabhängiger wird.

Ein Vorteil dieser Erfindung ist, dass die gängige Hardware nicht verändert werden muss, sondern die bestehende weiterverwendet werden kann. Das neue Verfahren kann in ein bestehendes Netzwerk integriert werden ohne dass vorhandene Geräte bzw. Steuereinheiten zu Schaden kommen. Ein eingesetzter Standard wird nicht verletzt, weil das vorhandene Protokoll genutzt werden kann.

Das Senden der verschlüsselten Nachrichten zur Zeitsynchronisation durch die ausgewählten Netzwerkgeräte kann beginnen, sobald an alle Netzwerkgeräte die eindeutige Uhrenidentifikation der bei der Initialisierung ermittelten Grandmaster Clock gesendet wurde. Es ist jedoch auch möglich das Senden der verschlüsselten Nachrichten zur Zeitsynchronisation erst zu beginnen, wenn eine erste Zeitsynchronisation aller Netzwerkgeräte des Netzwerks abgeschlossen ist.

Die Steuereinheiten sind miteinander über physikalische Schnittstellen verbunden. Nachrichten zur Zeitsynchronisation werden über für die Schnittstelle definierten logischen Port gesendet, so dass auch bei gemeinsam genutzten physikalischen Übertragungsmedien zwischen zwei Netzwerkgeräten Punkt-zu-Punkt-Verbindungen für die Zeitsynchronisation bestehen. In der vorliegenden Beschreibung wird der Begriff Schnittstelle gleichbedeutend mit dem Begriff Port verwendet, wenn sich aus dem Kontext nichts anderes ergibt.

Ein erfindungsgemäßes Computerprogrammprodukt enthält Befehle, die bei der Ausführung durch einen Computer diesen dazu veranlassen, eine oder mehrere Ausgestaltungen und Weiterentwicklungen des vorstehend beschriebenen Verfahrens ausführen.

Das Computerprogrammprodukt kann auf einem computerlesbaren Medium oder Datenträger gespeichert sein. Der Datenträger kann physisch verkörpert sein, bspw. als Festplatte, CD, DVD, Flash-Speicher oder dergleichen, der Datenträger bzw. das Medium kann aber auch ein moduliertes elektrisches, elektromagnetisches oder optisches Signal umfassen, das von einem Computer mittels eines entsprechenden Empfängers empfangen und in dem Speicher des Computers gespeichert werden kann.

Eine zumindest erfindungsgemäße Steuereinheit umfasst neben einem Mikroprozessor und nichtflüchtigem und flüchtigem Speicher sowie einem Zeitgeber mindestens eine physikalische Kommunikationsschnittstelle. Die Komponenten der Steuereinheit sind mittels einer oder mehreren Datenleitungen oder -bussen kommunikativ miteinander verbunden. Der Speicher der Steuereinheit enthält Computerprogramminstruktionen, die bei Ausführung durch den Mikroprozessor das Netzwerkgerät dazu einrichten, eine oder mehrere Ausgestaltungen des vorstehend beschriebenen Verfahrens zu implementieren.

Das erfindungsgemäße Verfahren kann mit existierenden Netzwerkgeräten umgesetzt werden, wobei ggf. nur Anpassungen in der Software bzw. der für den Empfang und die Verarbeitung von Nachrichten zur Zeitsynchronisation genutzten Zustandsmaschinen erforderlich sind, um nur die von der bei der Initialisierung ermittelten Grandmaster Clock kommenden Nachrichten zur Zeitsynchronisation für die Synchronisierung der Uhren zu nutzen, die zusätzlichen Nachrichten zur Zeitsynchronisation aber trotzdem weiterzuleiten und nicht einfach zu löschen. Dadurch fallen, wenn überhaupt, für die Umsetzung nur geringe zusätzliche Kosten an. Auch bestehende Systeme können durch entsprechend geänderte Software dazu eingerichtet werden, das Verfahren umzusetzen. Ein weiterer Vorteil des erfindungsgemäßen Verfahrens liegt darin, dass die jeweils zugrundeliegende Hardwareplattform ohne Bedeutung ist, solange diese eine Synchronisierung nach dem IEEE 802.1AS-Standard unterstützen.

### Kurze Beschreibung der Zeichnungen

Im Folgenden wird die Erfindung mit Bezug auf die Zeichnung exemplarisch erläutert. In der Zeichnung zeigt:
- Fig. 1: eine schematische Draufsicht auf ein Kraftfahrzeug mit einem Ausführungsbeispiel eines erfindungsgemäßen Ethernet-Bordnetzes;
- Fig. 2: eine schematische Darstellung des Ethernet-Bordnetzes mit einer ersten Steuereinheit, einer zweiten Steuereinheit und einer dritten Steuereinheit, welche mit einem ersten Verbindungsweg, einem zweiten Verbindungsweg und einem dritten Verbindungsweg verbunden sind;
- Fig. 3: ein Ablaufdiagramm zur Verschlüsselung der Zeitsynchronisationsnachrichten der Bestimmung einer Art eines Übertragungsmediums des jeweiligen Verbindungswegs;

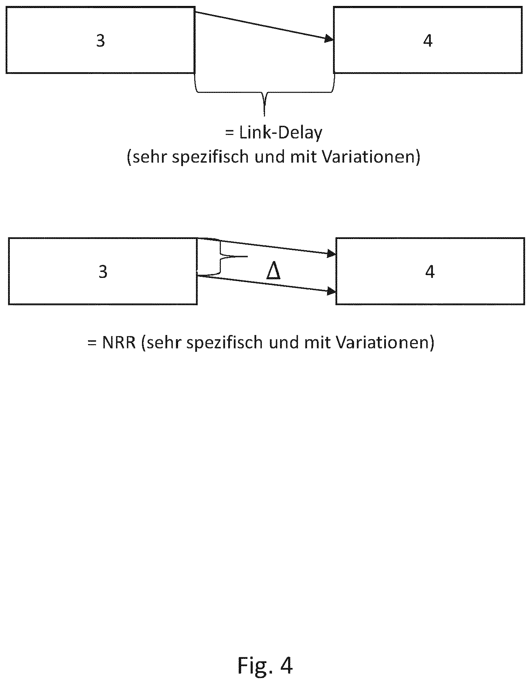

- Fig. 4: Darstellung des Link-Delay zweier verbundener Steuergeräte und Messung der Nachrichtenfrequenz;

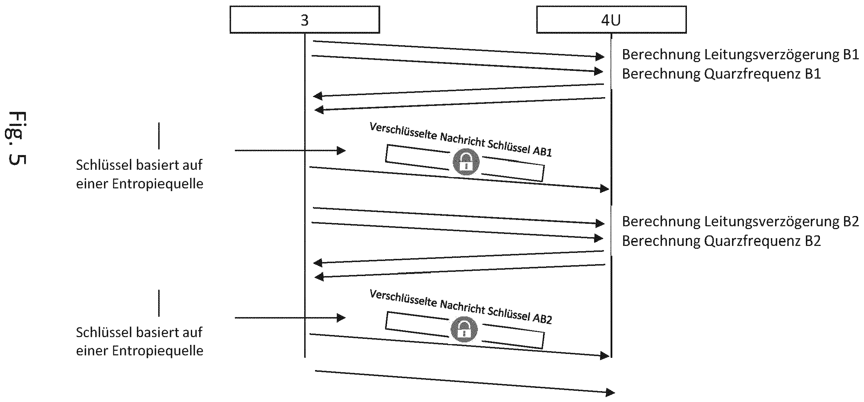

- Fig. 5: ein Ablaufdiagramm, bei dem immer wieder neue Schlüssel generiert werden;
- Fig. 6: ein Ablaufdiagramm zur Messung der Verzögerung, die den ersten Parameter für den Schlüssel bildet;
- Fig. 7: ein Ablaufdiagramm zur Bestimmung der individuellen Quarzfrequenz, die den zweiten Parameter für den Schlüssel bildet;
- Fig. 8: ein Ablaufdiagramm zur Berechnung des Schlüssels und zur Versendung der Nachrichten;
- Fig. 9: ein Ablaufdiagramm zur zeitlichen Verwendung eines Schlüssels;
- Fig. 10: ein Ablaufdiagramm zur Bestimmung einer Art eines Übertragungsmediums des jeweiligen Verbindungswegs;

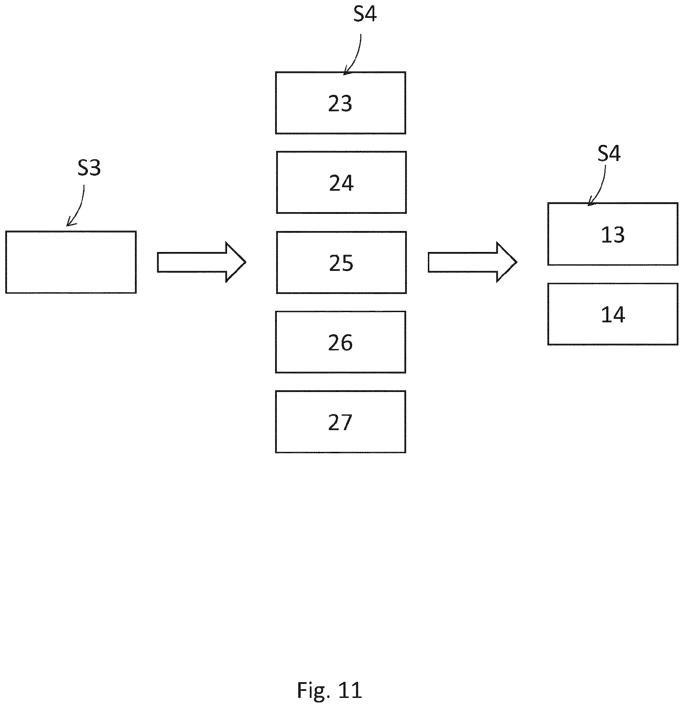

- Fig. 11: ein Ablaufdiagramm zur Anpassung eines Programms im Ethernet-Bordnetz;

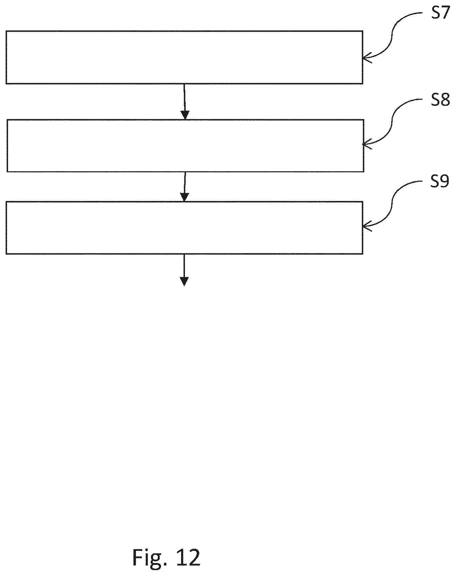

- Fig. 12: ein Ablaufdiagramm zur Bestimmung und Speicherung einer Laufzeit eines Signals;
- Fig. 13: ein Ablaufdiagramm zur Erstellung einer Referenzwertliste von Laufzeiten;

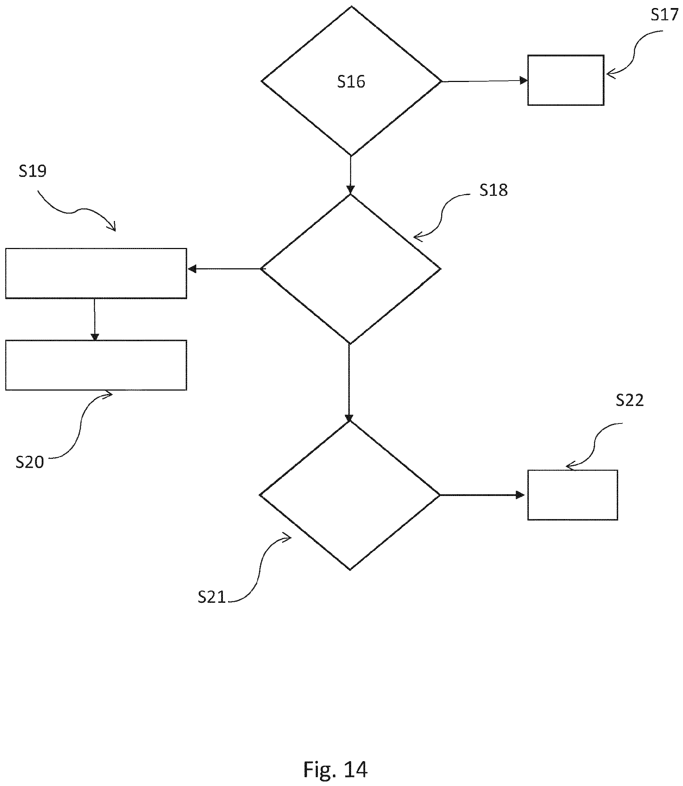

- Fig. 14: ein Ablaufdiagramm zur beispielhaften Anpassung eines Programms im Ethernet-Bordnetz;
- Fig. 15: Verschlüsselte Links mit dem erzeugten dynamischen Schlüssel aus der Kommunikation der Steuereinheiten;

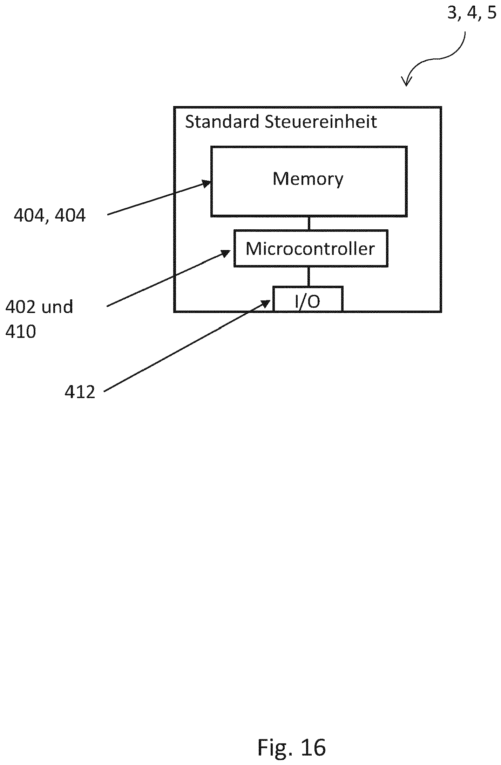

- Fig. 16: Aufbau einer Steuereinheit;
- Fig. 17: ein Ablauf zur Dekodierung.

Gleiche oder ähnliche Elemente können in den Figuren mit denselben Bezugszeichen referenziert sein.

### Beschreibung von Ausführungsbeispielen

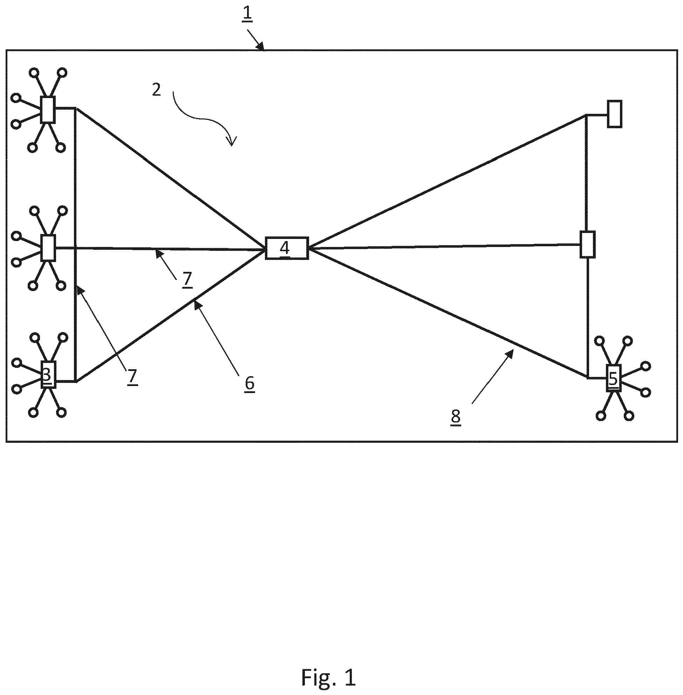

Fig. 1 zeigt ein Kraftfahrzeug 1 in Draufsicht. Das Kraftfahrzeug 1 weist ein Ethernet-Bordnetz 2 auf. Das Ethernet-Bordnetz 2 wiederum weist gemäß dem Ausführungsbeispiel eine Mehrzahl von Steuereinheiten 3, 4, 5, welche auch als Steuereinrichtungen oder Steuergeräte bezeichnet werden können. Die Steuereinheiten sind dabei mit Verbindungswegen untereinander verbunden. Aufgrund der vorhandenen Topologie des Ethernet-Bordnetzes 2 im Ausführungsbeispiel gibt es mehrere parallele Kommunikationswege zwischen den Steuereinheiten. Die Verbindungswege können beispielsweise aus unterschiedlichen Medientypen bzw. Materialien ausgebildet sein.

Mit Zunahme der Anzahl an Ethernet-Varianten wird beispielsweise auch die dynamische Änderung der Verbindungsgeschwindigkeit Einsatz finden. Das bedeutet beispielsweise, dass zur Laufzeit die Geschwindigkeit geändert werden kann. Beispielsweise kann ein 10 Gbit/s Verbindungsweg auf 100 Mbit/s geändert werden, damit Energie gespart wird. Da es sich dabei um eine dynamische Funktion handelt, kann es sein, dass das Bordnetz nach Auslieferung oder nach Erstmontage im Kraftfahrzeug anders ausgebildet ist als etwa nach einer Softwareaktualisierung oder in einer Fehlsituation.

Das Ethernet-Bordnetz 2 weist eine mindestens eine erste Steuereinheit 3, eine zweite Steuereinheit 4 und zusätzlich eine dritte Steuereinheit 5 auf. Die erste Steuereinheit 3 ist durch einen ersten Verbindungsweg 6 mit der zweiten Steuereinheit 4 verbunden. Weiterhin ist die erste Steuereinheit 3 gemäß dem Ausführungsbeispiel auch durch einen zweiten Verbindungsweg 7 mit der zweiten Steuereinheit 4 verbunden.

Die erste Steuereinheit 3, die zweite Steuereinheit 4 und/oder die dritte Steuereinheit 5 können beispielsweise als Steuergerät oder Netzwerkweiche ausgebildet sein. Die zweite Steuereinheit 4 und die dritte Steuereinheit 5 sind durch einen dritten Verbindungsweg 8 miteinander verbunden.

Gemäß dem Ausführungsbeispiel von Fig. 1 sind die erste Steuereinheit 3 und die zweite Steuereinheit 4 direkt über den ersten Verbindungsweg 6 miteinander verbunden während die erste Steuereinheit 3 und die zweite Steuereinheit 4 mit dem zweiten Verbindungsweg 7 nur indirekt verbunden sind, da der zweite Verbindungsweg 7 durch eine weitere Steuereinheit in zwei Teile geteilt ist. Gemäß einem anderen Ausführungsbeispiel kann der zweite Verbindungsweg 7 die erste Steuereinheit 3 und die zweite Steuereinheit 4 aber auch direkt miteinander verbinden.

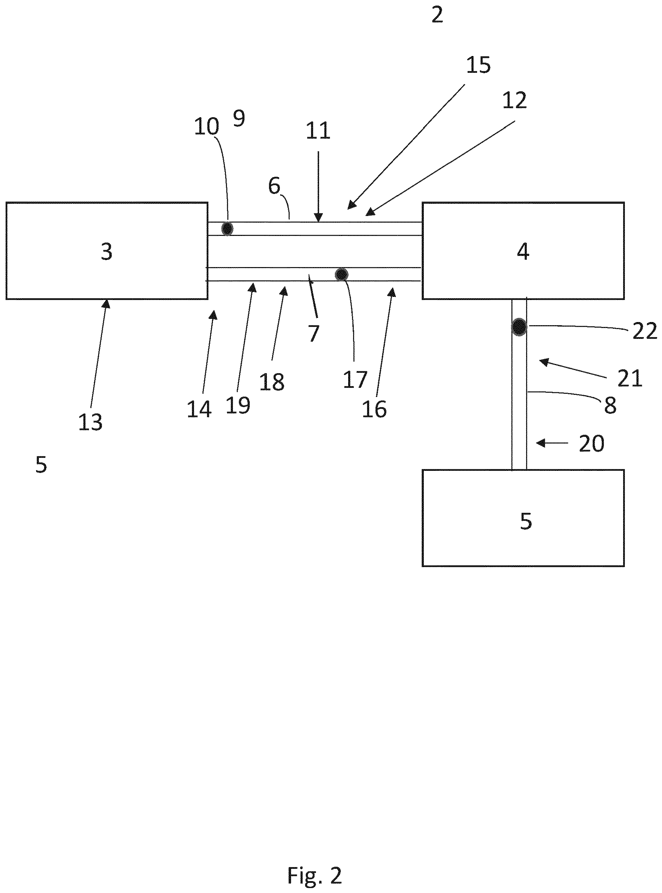

Fig. 2 zeigt ein weiteres Ausführungsbeispiel des Ethernet-Bordnetzes 2. Das Ethernet-Bordnetz 2 weist die erste Steuereinheit 3, die zweite Steuereinheit 4 und die dritte Steuereinheit 5 auf. Weiterhin weist das Ethernet-Bordnetz 2 auch den ersten Verbindungsweg 6, den zweiten Verbindungsweg 7 und den dritten Verbindungsweg 8 auf. Gemäß dem Ausführungsbeispiel wird eine Laufzeit 9 eines ersten Signals 10 auf dem ersten Verbindungsweg 6 bestimmt. Durch die Laufzeit 9 wird beschrieben, wie lange das erste Signal 10 über den ersten Verbindungsweg 6 von der ersten Steuereinheit 3 zur zweiten Steuereinheit 4 oder umgekehrt unterwegs ist. Anhand der Laufzeit 9 des ersten Signals 10 wird eine Maximalgeschwindigkeit 11 des ersten Verbindungswegs 6 bestimmt. Die Maximalgeschwindigkeit 11 des ersten Verbindungswegs 6 variiert dabei beispielsweise je nach Länge des Kabels, der Geschwindigkeit der Übertragung und/oder des Medientyps bzw. der Art des Übertragungsmediums. Anhand der Maximalgeschwindigkeit 11 wird eine Art eines Übertragungsmediums 12 des ersten Verbindungswegs 6 bestimmt.

Gemäß dem Ausführungsbeispiel wird die Art des Übertragungsmediums 12 als optisch, Kupfer oder drahtlos bestimmt. Bei optisch ist der erste Verbindungsweg 6 beispielsweise als Glasfaserverbindung ausgebildet. Bei Kupfer ist der erste Verbindungsweg beispielsweise durch Kabel mit verdrillten Adernpaaren, beispielsweise ein Kabel mit verdrillten Adernpaaren ohne Schirm (UTP - Unshielded Twisted Pair), ausgebildet. Bei drahtlos ist der erste Verbindungsweg 6 im Wesentlichen als Funkstrecke ausgebildet und die erste Steuereinheit 3 und/oder die zweite Steuereinheit 4 weisen einen Funkempfänger und/oder Funksender auf bzw. sind damit verbunden.

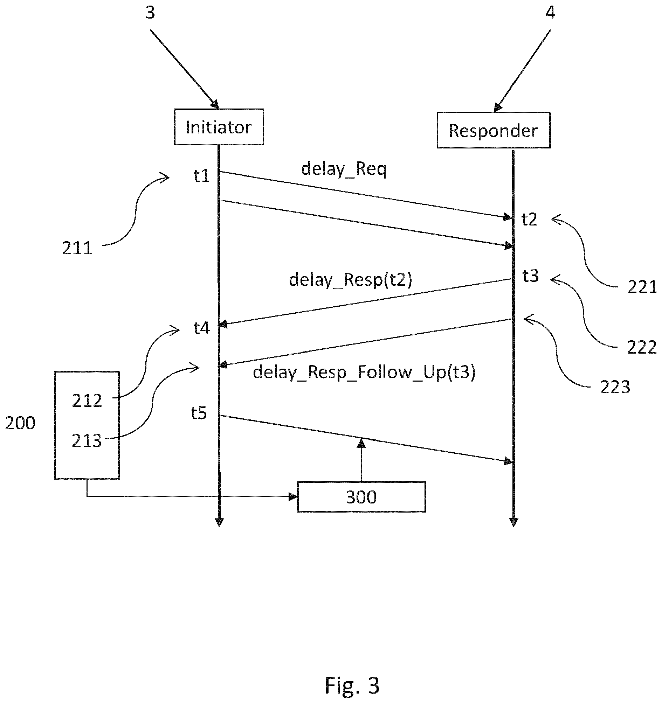

In Verbindung mit der in Fig. 3 angegebenem Ablauf mittelt die Steuereinheiten 3 eine Laufzeit für die Datenübermittlung über das Bordnetzwerk zur Steuereinheiten 4. Wichtig ist, dass die Ermittlung der Laufzeit in irgendeiner Form auf der Basis einer tatsächlichen physischen Gegebenheit des Übertragungsweges von dem ersten Steuereinheiten 3 zur Steuereinheit 4 erfolgt, d.h., dass es eine physische Gegebenheit oder Eigenschaft des Übertragungsweges gibt, deren Änderung zu einer Änderung der ermittelten Laufzeit führt.

Bei diesem vorgestellten Verfahren ermittelt die eine Steuereinheit 3 eine Laufzeit für die Datenübermittlung über das Netzwerk zur Steuereinheit 4. Dies kann auf beliebige Weise geschehen. Beispielsweise kann die Laufzeit im Zuge einer Zeitsynchronisation zwischen dem ersten Teilnehmer und dem zweiten Teilnehmer, etwa nach dem Zeitsynchronisationsstandard IEEE 802.1AS und dem darin enthaltenen PTP-Protokoll, erfolgen. So können etwa die im Rahmen dieses Protokolls implementierten "Delay Request"- und "Peer Delay"-Nachrichten als Datenpakete verwendet werden, wie in Fig. 3 angegeben. Das Verfahren ist jedoch hierauf nicht beschränkt. Wichtig ist nur, dass die Ermittlung der Laufzeit in irgendeiner Form auf der Basis einer tatsächlichen physischen Gegebenheit des Übertragungsweges von dem ersten Teilnehmer/Steuereinheit 3 zum zweiten Teilnehmer/Steuereinheit 4 erfolgt, d. h., dass es eine physische Gegebenheit oder Eigenschaft des Übertragungsweges gibt, deren Änderung zu einer Änderung der ermittelten Laufzeit führt.

Weiterhin ermittelt die erste Steuereinheit 3 die Nachrichtenfrequenz, die sich im Prinzip aus der Geschwindigkeit von PLL und Quarz ableitet, der gegenüberliegenden Steuereinheit 4. Aus diesen beiden Werten, welche sich ständig verändern auf Grund von Temperatur, Alterung usw. leitet die Steuereinheit 3 einen Schlüssel zur Verschlüsselung dieser Zeitnachrichten ab.

Die Zeitsynchronisationsnachrichten werden mit dem erzeugten dynamischen Schlüssel verschlüsselt, welcher sich generell ausgedrückt aus individuellen Parametern zum Verbindungspartner ableiten lässt.

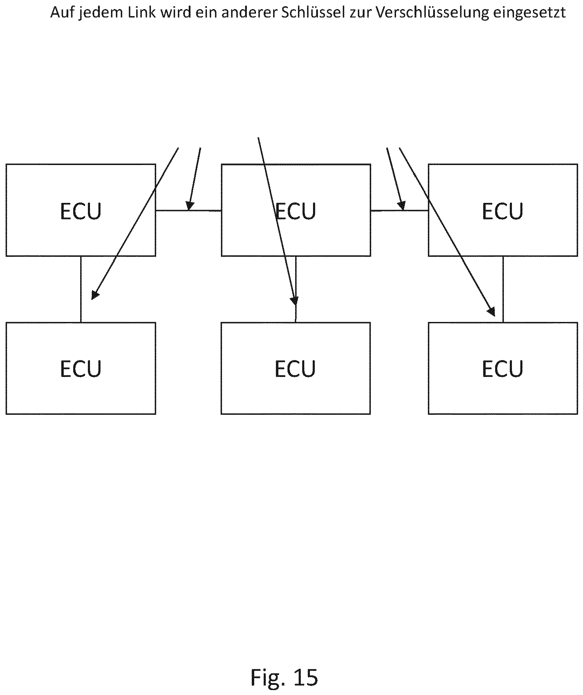

Auf Basis der Leitungsverzögerung 221 und der Nachrichtenfrequenz 213 wird ein individueller und sich ständig veränderter Schlüssel generiert. Dieser Schlüssel ist einmalig pro Zeiteinheit und auch pro Link unterschiedlich. Durch diesen Ansatz gibt es keinen Schlüssel zweimal im Netzwerk, wie in Fig. 15 dargestellt. Durch die Generierung der Schlüssel aus der Kombination von Punkt-zu-Punkt-Leitungsverzögerung und der Frequenz des Quarzes wird der Schlüssel besonders resistent gegen Umgehungsversuche, da sich zum einen der Schlüssel ständig verändert und zum anderen auf jedem Link im Fahrzeugnetzwerk unterschiedlich sein wird.

Die beiden Werten können entweder direkt in Kombination verwendet werden oder noch um andere statische Werte, welche beiden Steuergeräten bekannt sein müssen wie bspw. die Adresse, erweitert werden um die Schlüssel zu generieren.

Die jeweilige Steuereinheit, wobei das Verfahren auf beide Steuereinheiten, bzw. Teilnehmer/Linkpartner ausführbar sind, ermittelt daraus einen Zufallswert um den individuellen und nur kurzfristig geltenden Schlüssel für die Verschlüsselung zu erhalten. Wie in Fig. 3 dargestellt verändert sich der Schlüssel immer wieder, basierend auf den voran gegangenen Messungen, welche keinen Zusatzaufwand darstellen, da diese zur Zeitsynchronisation benutzt werden.

Die Art des Übertragungsmediums 12 wird einem Programm 13 im Ethernet-Bordnetz 2 mitgeteilt. Das Programm 13 kann beispielsweise in der ersten Steuereinheit 3, der zweiten Steuereinheit 4 oder der dritten Steuereinheit 5 oder einer weiteren Steuereinheit des Ethernet-Bordnetzes 2 vorhanden sein. Abhängig von der Art des Übertragungsmediums 12 wird eine Verbindungswegwahl 14 angepasst. So kann das Programm 13 beispielsweise durch die Verbindungswegwahl 14 Daten über einen anderen Verbindungsweg als vor der Verbindungswegwahl senden. Das Programm 13 kann aber beispielsweise auch das Senden von Daten durch die Verbindungswegwahl 14 unterbrechen und zu einem späteren Zeitpunkt wieder aufnehmen.

Gemäß dem Ausführungsbeispiel wird dem ersten Verbindungsweg 6 anhand der Art des Übertragungsmediums 12 ein Übertragungssicherheitswert 15 zugewiesen. Durch den Übertragungssicherheitswert wird eine Verlustwahrscheinlichkeit von über den Verbindungsweg übertragenen Daten beschrieben. Der Übertragungssicherheitswert 15 lässt also eine Aussage zu, wie zuverlässig die Daten über den ersten Verbindungsweg übertragen werden können. Dies wird der Entropiequelle 200 zugeführt. Ist beispielsweise ein Sicherheitsgrenzwert unterschritten und die Daten können nur unsicher übertragen werden, so ist damit zu rechnen, dass die Daten verzögert ihr Ziel erreichen oder aber, falls sich ein nochmaliges Senden aufgrund der benötigten Aktualität der Daten nicht lohnt, gar nicht ihr Ziel erreichen.

Gemäß einem weiteren Ausführungsbeispiel werden Laufzeiten von einer Mehrzahl von Signalen auf dem ersten Verbindungsweg 6 bestimmt und die schnellste Laufzeit der Mehrzahl der Signale wird ausgewählt. Die Maximalgeschwindigkeit 11 des ersten Verbindungswegs 6 wird dann anhand der schnellsten Laufzeit bestimmt.

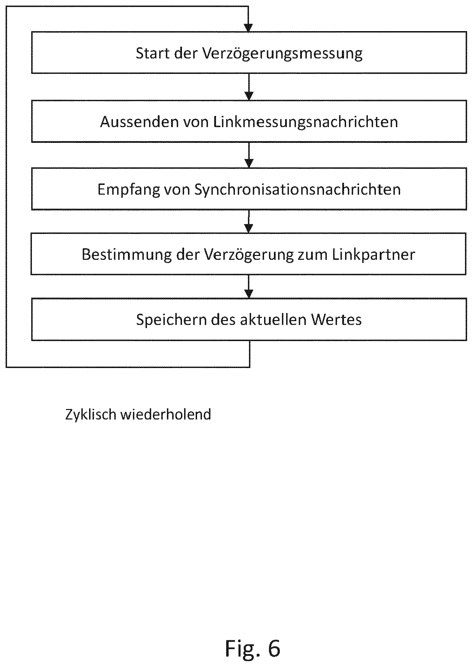

Eine Steuereinheit startet die Verzögerungsmessung und wartet auf dem Empfang der Linkpartner Nachrichten. Auf Basis des Empfangs der Nachrichten am Beispiel PTP kann die Leitungsverzögerung gemessen werden gemäß der Fig 6. Wenn der eine Linkpartner die Verzögerungsmessung startet, dann bekommt dies der andere Linkpartner zwangsläufig mit und soll ebenfalls eine Messung starten damit diese beiden Messungen auch einen zusammengehörigen Messwert generieren können, wie in Fig. 3 angegeben.

Zur Erläuterung wird hier das Vorgehen am Beispiel von PTP angegeben. PTP definiert drei Mechanismen: Messung der Leitungsverzögerung zwischen Nachbarknoten, Bestimmung der besten Uhr und den Austausch von Zeitinformationen. Der Peer Delay-Mechanismus hat die Aufgabe, die Verzögerung zwischen zwei verbundenen Ports zu messen. Die gemessene Laufzeit wird genutzt, um die Zeitinformationen der Knoten zu korrigieren und diese Zeit mit einzurechnen. Delay_Request-Nachrichten werden zyklisch von beiden Kommunikationspartnern unabhängig voneinander versendet. Ist der jeweilige Knoten IEEE 802.1AS fähig, so wird dieser mit einer Delay_Response- und einer Pdelay_Resp_Follow_Up-Nachricht antworten. Diese Nachrichten werden beim Eingang mit einem Hardwarezeitstempel versehen und an die PTP-Anwendung weitergeleitet. Dadurch lässt sich die Latenz und die zeitliche Differenz zum benachbarten Port bestimmen. Ein Port, der Initiator, startet die Messung, indem er eine Delay_Request-Nachricht an den mit ihm verbundenen Port, den Responder sendet und einen Ausgangszeitstempelt1 generiert. Dieser Ausgangszeitstempel bezeichnet einen Hardware-Zeitstempel, der so spät wie möglich beim Verlassen des Ethernet-Transceivers geschrieben wird. Der Responder generiert beim Eintreffen dieses Paketes einen Zeitstempel t2. Als Antwort sendet der Responder eine Delay_Response-Nachricht. In dieser Nachricht überträgt er den Empfangs-Zeitstempel t2 der Delay_Request-Nachricht. Verlässt diese Nachricht den Responder, so erzeugt dieser wiederum einen Zeitstempel t3, welcher in einer unmittelbar darauffolgenden Delay_Response_Follow-Up-Nachricht versendet wird. Beim Empfang der Delay_Response-Nachricht beim Initiator generiert dieser einen Zeitstempel t4. Der Initiator kann aus den vier Zeitstempeln t1 bis t4 die durchschnittliche Laufzeit der zurückgelegten Strecken errechnen.

PTP definiert eine Master-/Slave-Uhrenhierarchie mit einer besten Uhr innerhalb eines AVB-Netzwerkes. Von dieser Uhr, dem Grandmaster, leitet sich die Zeitbasis der in diesem Netzwerk befindlichen Knoten ab. Der Best Master Clock Algorithmus (BMCA) dient zur Bestimmung dieses Uhrentyps und der Bekanntmachung dieser Information im Netzwerk. IEEE 802.1AS-fähige Systeme senden zyklisch Announce-Nachrichten zu ihren Nachbarknoten mit Informationen zur besten Uhr der AVB-Wolke. Der Empfänger einer solchen Nachricht vergleicht diese Informationen mit den Merkmalen seiner Uhr und den evtl. bereits von einem anderen Port empfangenen Nachrichten. Auf Basis dieser Nachrichten wird ein Zeitsychronisationsspannbaum aufgestellt. Jedem Port wird in diesem Zuge einer von vier Port-Zuständen zugewiesen. Den Zustand Master Port bekommt der Port, der einen kürzeren Weg zum Grandmaster hat als sein Linkpartner. Der Zustand Slave wird dann zugeordnet, wenn an diesem Knoten noch kein anderer Port diesen Zustand besitzt. Disabled wählt derjenige Port, welcher dass PTP-Protokoll nicht vollständig unterstützen kann. Der Zustand passiv wird gewählt, wenn keiner der anderen drei Zustände zutrifft.

Der Austausch der Zeitinformation wird schließlich durch den Sync_Follow_Up-Mechanismus durchgeführt. Die Master Ports senden zyklisch Sync- und Follow_Up-Nachrichten an den benachbarten Linkpartner. Wenn die Sync-Nachricht den Master Port verlässt, wird ein Zeitstempel generiert, welcher unmittelbar in einer darauffolgenden Follow_Up-Nachricht übertragen wird. Dieser Zeitstempel entspricht der aktuellen Uhrzeit des Grandmaster zum Sendezeitpunkt der Sync-Nachricht. Die vom Grandmaster ausgehenden Nachrichten werden nicht weitergeleitet, sondern in jedem Knoten, auch den Switchen, neu erstellt. Dann startet die Messung zur Feststellung der individuellen Quarzfrequenz, abgeleitet aus der Nachrichtenfrequenz. Auf Basis des Empfangs der Nachrichten am Beispiel PTP kann die Frequenz berechnet werden, wie es in der Fig. 3 angedeutet. Es ist nicht immer sichtbar das der Linkpartner auch zeitgleich die Frequenz misst, weshalb die Frequenzmessung stetig durchgeführt werden sollte.

Analog zu der vorstehend beschriebenen Vorgehensweise kann auch die Art des Übertragungsmediums 12 für den zweiten Verbindungsweg 7 und oder den dritten Verbindungsweg 8 bestimmt werden. Die jeweiligen aufgenommenen Werte sind unterschiedlich, bleiben jeweils geheim und im Steuergerät abgespeichert und werden zudem nicht über das Netzwerk übertragen - müssen Sie auch nicht. Dass Herausfinden des Schlüssels durch bloßes Probieren ist hinreichend unwahrscheinlich. Unter Berücksichtigung der beiden Werte wird ein individueller Schlüssel generiert. Zum einen ist die Frequenz eines jeden Quarzes unterschiedlich und zum anderen ist die Leitungsverzögerung jedes Links unterschiedlich. Hier werden zwei schwankende Werte addiert und geben einen noch schwerer zu erratenden dritten Wert - den Wert des Schlüssels. Die Leitungsverzögerung kann typischerweise im Bereich von 50-500 Nanosekunden ausfallen und die Frequenz ist ein Parameter und wird in +/- ppm angegeben. Die Leitungsverzögerung hin und rückwärts basiert auf dem gleichen Kanal, weshalb die berechneten Werte auf beiden Seiten des Links gleich sind. Die Parameter müssen deshalb nicht ausgetauscht werden. Die NRR bestimmt das gemessene Verhältnis der Frequenz der LocalClock-Einheit des Timeaware-Systems am anderen Ende der an diesem Port angeschlossenen Verbindung zur Frequenz der LocalClock-Einheit dieses zeitgesteuerten Systems.

Time Awareness System ist hier mit Steuereinheit gleichzusetzen.

Die NRR steht auch beiden Partnern zur Verfügung, ohne dass diese ausgetauscht werden muss. Der aussende Knoten weiß genau, wann die Nachricht versendet wurde (Hardwarezeitstempel) und der empfangene Knote weiß mithilfe der voran gegangenen Leitungsvermessung genau, wann diese Nachricht versendet wurde. Somit haben beide Partner nahezu zur gleichen Zeit die gleichen Werte zur Generierung des Schlüssels. Der eine Linkpartner verschlüsselt mithilfe dieser beider Werte entstehend aus der letzten Messung und der andere Linkpartner entschlüsselt mit seinen letzten Werten.

So ist es auch vorgesehen, dass eine Laufzeit 16 eines zweiten Signals 17 auf dem zweiten Verbindungsweg 7 bestimmt wird. Es wird dann eine Maximalgeschwindigkeit 18 des zweiten Verbindungswegs 7 anhand der Laufzeit 16 des zweiten Signals 17 bestimmt. Anhand der Maximalgeschwindigkeit 18 des zweiten Verbindungswegs 7 wiederum wird eine Art des Übertragungsmediums 19 des zweiten Verbindungswegs 7 bestimmt.

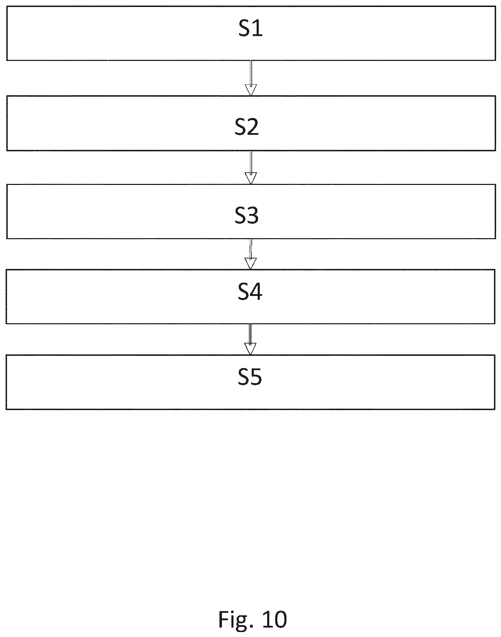

Es ist vorteilhaft den aktuellen Schlüssel A1 zu verwenden solange keine neue Leitungsmessung durchgeführt wird wie in Fig. 10 vorgeschlagen. Somit weiß der Linkpartner immer welcher Schlüssel zu verwenden ist, wenn keine neue Leitungsmessung vorher angestoßen wurde. Ein neuer Schlüssel soll/kann entweder zyklisch generiert werden, z. B. vorgegebene Frequenz, nach Bedarf gestartet werden durch einen Trigger oder immer direkt vor dem Senden von wichtigen Nachrichten.

Sowohl die erste Steuereinheit 3 als auch die zweite Steuereinheit 4 und auch die dritte Steuereinheit 5 können in einem Normalbetriebsmodus oder in einem Energiesparmodus betrieben werden. Im Energiesparmodus verbraucht die jeweilige Steuereinheit weniger Energie als im Normalbetriebsmodus. Es kann beispielsweise im Energiesparmodus die Geschwindigkeit eines Ports der jeweiligen Steuereinheit gegenüber der Geschwindigkeit im Normalbetriebsmodus reduziert werden. Die reduzierte Geschwindigkeit des Ports hat dann auch Auswirkung auf die jeweilige Maximalgeschwindigkeit des jeweiligen Verbindungswegs.

Gemäß einem weiteren Ausführungsbeispiel kann von der ersten Steuereinheit 3 eine Dienstnachricht 20 an die dritte Steuereinheit 8 gesendet werden. Durch die Dienstnachricht 20 wird dann die Bestimmung einer Laufzeit 21 eines dritten Signals 22 ausgelöst. Das dritte Signal 22 wird zwischen der zweiten Steuereinheit 4 und der dritten Steuereinheit 5 gesendet. Die Laufzeit 21 des dritten Signals 22 wird gemäß dem Ausführungsbeispiel durch die dritte Steuereinheit 5 bestimmt.

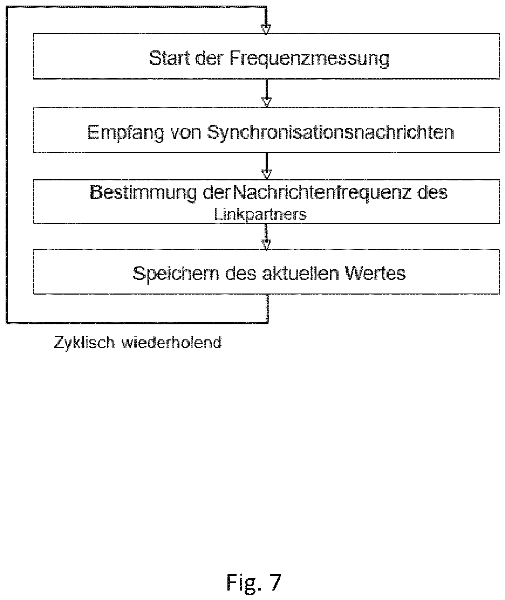

Fig. 7 beschreibt allgemein das Verfahren zur Laufzeitbestimmung. In einem Schritt S1 wird die Laufzeit 9 des ersten Signals 10 bestimmt. In einem Schritt S2 wird die Art des Übertragungsmediums 12 bestimmt. In einem Schritt S3 wird schließlich das Programm 13 angepasst.

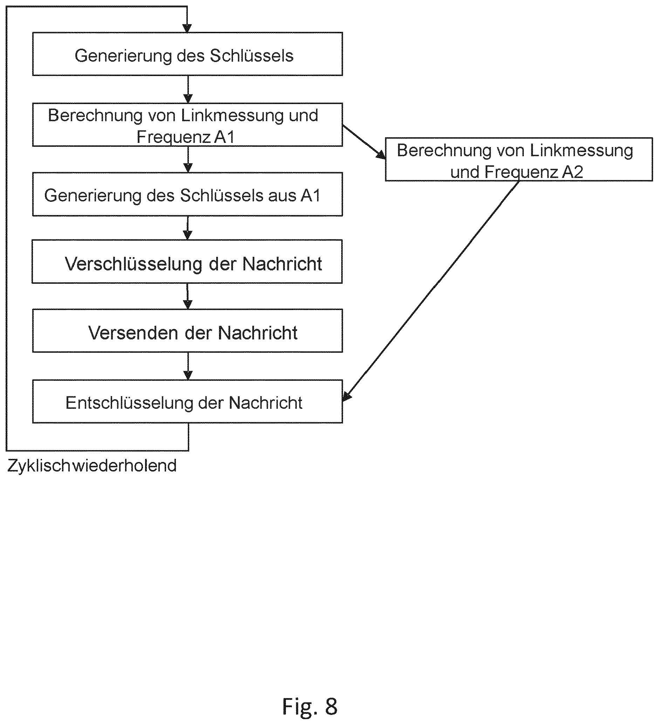

Fig. 8 zeigt ein Ablaufdiagramm zur Berechnung der jeweiligen Parameter bzw. der jeweiligen Parameter, welche der Art des Übertragungsmediums 12 zugewiesen sind. In einem Schritt S4 wird die Laufzeit 9 des ersten Signals 10 bestimmt. Dadurch kann in einem Schritt S5 die Art des Übertragungsmediums 12 bestimmt werden. Die Art des Übertragungsmediums 12 kann wiederum folgende Parameter umfassen: Geschwindigkeit 23, Medium 24, Kabellänge 25, Leistungsübertragung 26, Bitfehlerrate 27. In einem Schritt S6 folgt dann schließlich die Anpassung des Programms 13 und die Verbindungswegwahl 14.

Gemäß dem Ausführungsbeispiel wird vorgeschlagen, zwischen verbundenen Steuereinheiten bzw. Controllern die Laufzeit der Signale zu messen. Zum Messen der Laufzeiten 9, 16 und 21 können beispielsweise Methoden des Standards IEEE 1588 oder IEEE 802.1AS genutzt werden. Auch durch TTEthernet (time triggered ethernet) können beispielsweise Methoden bereitgestellt werden um die jeweilige Laufzeit 9, 16 und 21 zu bestimmen.

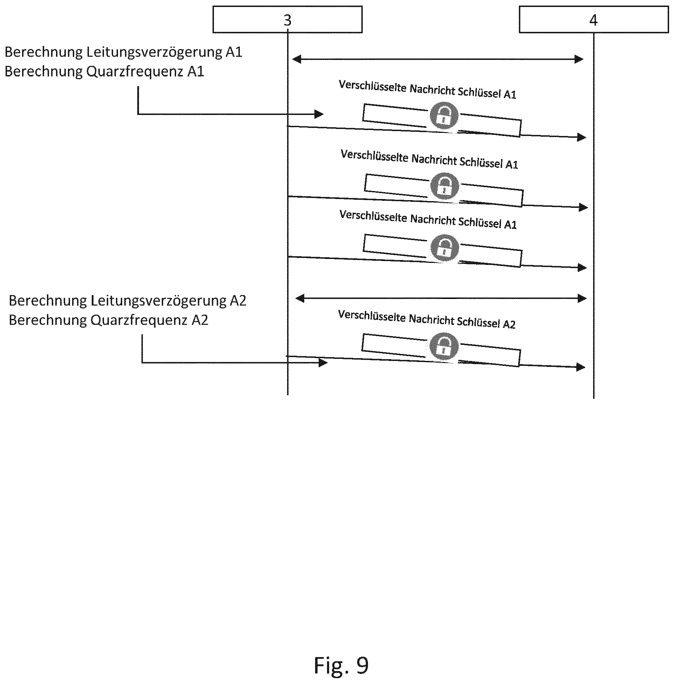

Fig. 9 zeigt das Bestimmen der jeweiligen Laufzeit 9, 16 und 21. Es wird eine lokale und eine nicht lokale Abfrage der Laufzeit beschrieben. Das Programm 13, welches insbesondere auf mindestens einer Steuereinheit ausgeführt wird, bestimmt vorzugsweise erst mal lokal die lokale Laufzeit oder die Laufzeiten, wenn mehr als eine Steuereinheit direkt verbunden ist. Danach werden vorzugsweise andere Steuereinheiten über ein serviceorientiertes Verfahren, beispielsweise SOME/IP (Scalable Service-Oriented Middleware over IP) deren Laufzeit zu dem Nachbarn abgefragt. Dies kann entweder zentral oder dezentral umgesetzt werden. Die Abfrage kann entweder einmal, bei Systemstart, Definition oder nach Softwareupdate durchgeführt werden oder aber zyklisch ausgeführt werden um dynamische Änderungen zu erkennen. Diese Daten werden dann, insbesondere inklusive der Adressen der Steuereinheiten beim ersten Mal gespeichert und zugeordnet.

In einem Schritt S7 wird die jeweilige Laufzeit zu den direkt verbundenen Steuereinheiten bestimmt. In einem Schritt S8 werden die jeweiligen Laufzeiten von anderen Verbindungswegen abgefragt. In einem Schritt S9 werden die jeweiligen Laufzeiten und deren zugehörige Verbindungspartner gespeichert.

Fig. 10 zeigt ein weiteres Verfahren um auf Basis einer Referenzmessung die anderen Geschwindigkeiten abzuleiten. Wenn beispielsweise die aktuelle Temperatur sehr hoch ist oder schlechte Kabel verwendet werden, dann können vorgespeicherte Werte eventuell zu ungenau sein. Daher wird vorgeschlagen, dass die Anwendung bzw. das Programm 13 an ihrer eigenen Steuereinheit selber Messungen durchführt, insbesondere unter Kenntnis der eigenen Parameter, und anderen Geschwindigkeiten, welche dann daraus abgeleitet und berechnet werden können.

In einem Schritt S10 wird eine Analyse pro lokalem Ethernet-Port durchgeführt. In einem Schritt S11 wird abgefragt, ob Kanalparameter bekannt sind. Ist dies nicht der Fall, so folgt ein Schritt S12 und das Verfahren ist beendet. Ist dies der Fall so folgt ein Schritt S13, in welchem die jeweilige Laufzeit 9, 16 und 21 bestimmt wird. In einem Schritt S14 erfolgt die Speicherung und die bestimmte Laufzeit wird in Bezug zu den Kanalparametern gesetzt. In einem Schritt S15 wird eine Referenzwertliste erstellt.

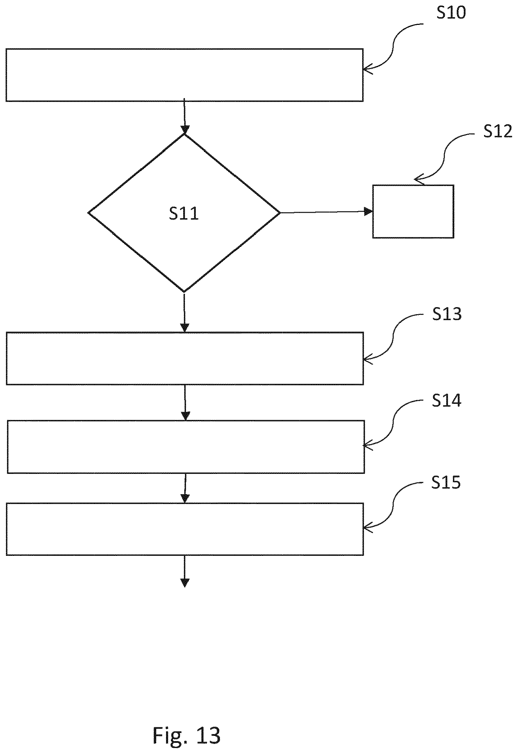

Fig. 13 zeigt eine mögliche Optimierung durch Wissen über die Art des Übertragungsmediums 12, 19. In einem Schritt S16 wird entschieden, ob die Art des Übertragungsmediums 12, 19 Kupfer ist. Ist dies der Fall, so folgt ein Schritt S17, bei welchem bestätigt wird, dass PoDL (Power over Data Lines), also die Stromversorgung über Ethernet möglich ist. Wird im Schritt S16 entschieden, dass das Medium nicht Kupfer ist, so folgt ein Schritt S18. Im Schritt S18 wird überprüft, ob die Art des Übertragungsmediums 12 optisch ist. Ist dies der Fall, so folgt ein Schritt S19. Im Schritt S19 wird festgestellt, dass dadurch eine geringere Bitfehlerrate vorliegt und dadurch eine höhere Zuverlässigkeit dieses Verbindungswegs vorliegt.

In einem Schritt S20 wird die Möglichkeit gegeben RX (Empfangseinheit) oder TX (Sendeeinheit) der Steuereinheit 3, 4, 5 zu deaktivieren, falls dies nicht benötigt ist.

Wird im Schritt S18 entschieden, dass das Medium bzw. die Art des Übertragungsmediums 12 nicht optisch sind, so wird in einem Schritt S21 davon ausgegangen, dass der jeweilige Verbindungsweg als der betreffende Verbindungsweg als direkte MII-Verbindung (Media Independent Interface) ausgebildet ist. In diesem Fall eignet sich die jeweilige Steuereinheit beispielsweise für IEEE P802.1CB (Frame Replication and Elimination for Redundancy).

Weitere Möglichkeiten ergeben sich aus dem Wissen über die Übertragungsgeschwindigkeit. Kombiniert mit den aktuellen Datenströmen können beispielsweise Daten gezielt über eine hochbandbreitige Verbindung übertragen werden und somit andere, nicht benötigte Verbindungswege deaktiviert werden, wodurch Energie gespart werden kann.

Außerdem besteht bei hochbandbreitigen Verbindungen die Möglichkeit, Redundanzmechanismen (z.B. IEEE 802.1CB) zu verwenden. Da die Daten hierbei kontinuierlich redundant übertragen werden, ist dafür eine hohe Bandbreite notwendig. Denkbar ist auch eine Anpassung der Anwendung je nach Geschwindigkeit des Übertragungswegs. Eine Kamera kann beispielsweise je nach Geschwindigkeit des Links bzw. des Verbindungswegs 6, 7, 8 die Auflösung der zu übertragenden Bilddaten anpassen

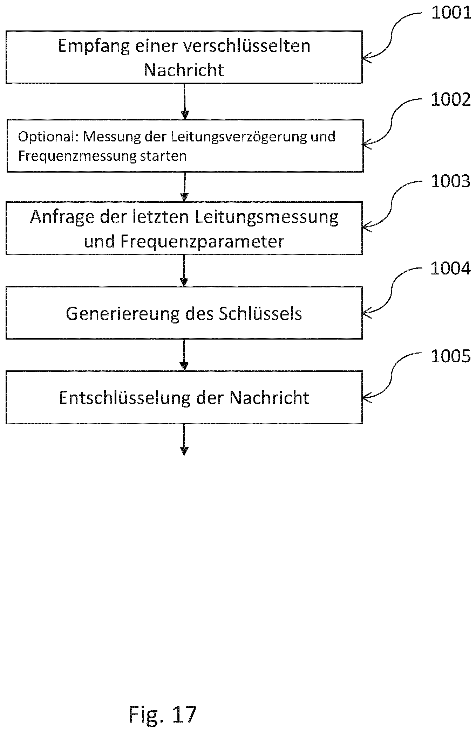

Die Steuereinheit 3,4,5 umfasst neben einem Mikroprozessor 402 flüchtigen und nichtflüchtigen Speicher 404, 406, zwei Kommunikationsschnittstellen 408, sowie einen synchronisierbaren Zeitgeber 410. Die Elemente des Netzwerkgeräts sind über eine oder mehrere Datenverbindungen oder -busse 412 kommunikativ miteinander verbunden. Der nichtflüchtige Speicher 406 enthält Programminstruktionen die, wenn sie von dem Mikroprozessor 402 ausgeführt werden, zumindest eine Ausgestaltung des erfindungsgemäßen Verfahrens implementieren und die Entropiequelle im flüchtigen und/oder nichtflüchtigen Speicher 404, 406 gebildet wird, aus der dann die dynamischen Schlüssel 28 für die Verbindungswege 6 gebildet werden. In Fig.17 ist der Dekodierungsablauf des dynamischen Schlüssels bei der Entschlüsselung angegeben.

### Bezugszeichenliste

- 1: Kraftfahrzeug
- 2: Ethernet-Bordnetz
- 3: erste Steuereinheit
- 4: zweite Steuereinheit
- 5: dritte Steuereinheit
- 6: erster Verbindungsweg
- 7: zweiter Verbindungsweg
- 8: dritter Verbindungsweg
- 9: Laufzeit des ersten Signals
- 10: erstes Signal
- 11: Maximalgeschwindigkeit des ersten Verbindungswegs
- 12: Art des Übertragungsmediums des ersten Verbindungswegs
- 13: Programm
- 14: Verbindungswegwahl
- 15: Übertragungssicherheitswert
- 16: Laufzeit des zweiten Signals
- 17: zweites Signal
- 18: Maximalgeschwindigkeit des zweiten Verbindungswegs
- 19: Art des Übertragungsmediums des zweiten Verbindungswegs
- 20: Dienstnachricht
- 21: Laufzeit des dritten Signals
- 22: drittes Signal
- 23: Geschwindigkeit
- 24: Medium
- 25: Kabellänge
- 26: Leistungsübertragung
- 27: Bitfehlerrate
- 28: dynamischer Schlüssel
- 29: Zeitsynchronisationsnachricht
- 200: Entropiequelle
- 211: Senden zum Zeitpunkt t1
- 212: Empfang zum Zeitpunkt t4
- 213: Empfang zum Zeitpunkt t4
- 221: Empfang zum Zeitpunkt t2
- 222: Senden zum Zeitpunkt t3
- 223: Verzögertes Senden zum Zeitpunkt t3
- 300: verschlüsselte Nachricht zum Zeitpunkt t5
- 400: Steuereinheit
- 402: Mikroprozessor
- 404: RAM
- 406: ROM
- 408: Kommunikationsschnittstelle
- 410: Zeitgeber
- 412: Bus / Kommunikationsinterface
- 1001: Empfang einer verschlüsselten Nachricht
- 1002: Messung der Leitungsverzögerung und Frequenzmessung starten
- 1003: Anfrage der letzten Leitungsmessung und Frequenzparameter
- 1004: Generierung des Schlüssels
- 1005: Entschlüsselung der Nachricht
- A1: Berechnung Leitungsverzögerung 1 und Berechnung Quarzfrequenz 1
- A2: Berechnung Leitungsverzögerung 2 und Berechnung Quarzfrequenz 2
- B1: Berechnung Leitungsverzögerung 1 und Berechnung Quarzfrequenz 1
- B2: Berechnung Leitungsverzögerung 2 und Berechnung Quarzfrequenz 2

## Patentansprüche

1. Verfahren zur Absicherung der Zeitsynchronisation eines Ethernet-Bordnetzes (2) eines Kraftfahrzeugs (1), bei welchem folgende Schritte durchgeführt werden:
- Bestimmen einer Laufzeit (9) eines ersten Signals (10) auf einem ersten Verbindungsweg (6) zwischen einer ersten Steuereinheit (3) des Ethernet-Bordnetzes (2) und einer zweiten Steuereinheit (4) des Ethernet-Bordnetzes (2);
- Bestimmen einer Maximalgeschwindigkeit (11) des ersten Verbindungswegs (6) anhand der Laufzeit (9); und
- Bestimmen einer Art eines Übertragungsmediums (12) des ersten Verbindungswegs (6) anhand der Maximalgeschwindigkeit (11),
**dadurch gekennzeichnet,**
**dass** durch die Bestimmung der Laufzeit (9) eines ersten Signals (10) und der Bestimmen der Maximalgeschwindigkeit (11) des ersten Verbindungswegs und die Bestimmung der Art eines Übertragungsmediums (12) des ersten Verbindungswegs (6) eine Entropiequelle gebildet wird, aus der mindestens ein dynamischer Schlüssel (28) für den Verbindungsweg (6) ermittelt wird, der zur Verschlüsselung einer Zeitsynchronisationsnachrichten für den Verbindungsweg (6) eingesetzt wird.

2. Verfahren nach Anspruch 1, **dadurch gekennzeichnet, dass** der dynamische Schlüssel (28) für den Verbindungsweg (6) einmalig pro Zeiteinheit und für jeden Link und im Ethernet-Bordnetzwerk einmalig ist.

3. Verfahren nach Anspruch 1 oder 2, **dadurch gekennzeichnet, dass** eine Generierung des dynamischen Schlüssels (28) für den Verbindungsweg (6) durch die Kombination einer Punkt-zu-Punkt-Leitungsverzögerung und der Nachrichtenfrequenz erfolgt

4. Verfahren nach einem der Ansprüche 1 bis 3, **dadurch gekennzeichnet, dass** die Art des Übertragungsmediums (12) einem Programm (13) im Ethernet-Bordnetz (2) mitgeteilt wird und eine Verbindungswegwahl (14) des Programms (13) abhängig von der Art des Übertragungsmediums (12) angepasst wird und das Programm (13) sämtliche Information der Entropiequelle aufnimmt und die Generierung des dynamischer Schlüssel (28) für den Verbindungsweg (6) erfolgt.

5. Verfahren nach einem der Ansprüche 1 bis 3, **dadurch gekennzeichnet, dass** die Art des Übertragungsmediums (12) als optisch, Kupfer oder drahtlos bestimmt wird.

6. Verfahren nach einem der vorhergehenden Ansprüche, **dadurch gekennzeichnet, dass** dem ersten Verbindungsweg (6) anhand der Art des Übertragungsmediums (12) ein Übertragungssicherheitswert (15), welcher eine Verlustwahrscheinlichkeit von über den ersten Verbindungsweg (6) übertragenen Daten beschreibt, zugewiesen wird.

7. Verfahren nach einem der vorhergehenden Ansprüche, **dadurch gekennzeichnet, dass** Laufzeiten von einer Mehrzahl von Signalen auf dem ersten Verbindungsweg (6) bestimmt werden und die schnellste Laufzeit der Mehrzahl der Signale ausgewählt wird, wobei die Maximalgeschwindigkeit (11) des ersten Verbindungswegs (6) anhand der schnellsten Laufzeit bestimmt wird.

8. Verfahren nach einem der vorhergehenden Ansprüche, **dadurch gekennzeichnet, dass** eine Laufzeit (16) eines zweiten Signals (17) auf einem vom ersten Verbindungsweg (6) unterschiedlichen zweiten Verbindungsweg (7) zwischen der ersten Steuereinheit (3) und der zweiten Steuereinheit (4) bestimmt wird, und eine Maximalgeschwindigkeit (11) des zweiten Verbindungswegs (7) bestimmt wird, wobei eine Art des Übertragungsmediums (19) des zweiten Verbindungswegs (7) anhand der Maximalgeschwindigkeit (11) des zweiten Verbindungswegs (7) bestimmt wird.

9. Verfahren nach einem der vorhergehenden Ansprüche, **dadurch gekennzeichnet, dass** das Verfahren nach einem Wechsel der ersten Steuereinheit (3) von einem Normalbetriebsmodus in einen Energiesparmodus und/oder vom Energiesparmodus in den Normalbetriebsmodus ausgeführt wird.

10. Verfahren nach einem der vorhergehenden Ansprüche, **dadurch gekennzeichnet, dass** die Laufzeit (9) des ersten Signals (10) mit der ersten Steuereinheit (3) bestimmt wird und eine Laufzeit (21) eines dritten Signals (22) auf einem nur indirekt mit der ersten Steuereinheit (3) verbundenen dritten Verbindungsweg (8) zwischen der zweiten Steuereinheit (4) und einer dritten Steuereinheit (5) des Ethernet-Bordnetzes (2) mit der dritten Steuereinheit (5) bestimmt wird, wobei die Bestimmung der Laufzeit (21) des dritten Signals (22) durch eine von der ersten Steuereinheit (3) an die dritte Steuereinheit (5) gesendete Dienstnachricht (20) ausgelöst wird.

11. Steuereinheit für ein Ethernet-Bordnetz (2), welche als erste Steuereinheit (3) dazu ausgebildet ist:
- ein Signal (10) an eine zweite Steuereinheit (4) des Ethernet-Bordnetzes (2) zu senden und das Signal (10) von der zweiten Steuereinheit (4) zu empfangen;
- eine Laufzeit (9) des Signals (10) auf einem Verbindungsweg (6) zur zweiten Steuereinheit (4) zu bestimmen;
- eine Maximalgeschwindigkeit (11) des Verbindungswegs (6) anhand der Laufzeit (9) zu bestimmen; und
- eine Art eines Übertragungsmediums (12) des Verbindungswegs (6) anhand der Maximalgeschwindigkeit (11) zu bestimmen,
**dadurch gekennzeichnet, dass** die Steuereinheit (3) umfasst mindestens:
- ein Mikroprozessor (402),
- einen flüchtigen Speicher (404) und nichtflüchtigen Speicher (406),
- mindestens zwei Kommunikationsschnittstellen (408),
- einen synchronisierbaren Zeitgeber 410,
der nichtflüchtige Speicher (406) Programminstruktionen enthält die, wenn sie von dem Mikroprozessor (402) ausgeführt werden, zumindest eine Ausgestaltung des erfindungsgemäßen Verfahrens nach Anspruch 1 bis 10 implementieren und die Entropiequelle im flüchtigen und/oder nichtflüchtigen Speicher 404, 406 gebildet wird, aus der die dynamischen Schlüssel (28) für die Verbindungswege (6) gebildet werden.

12. Ethernet-Bordnetz (2) für ein Kraftfahrzeug (1), mit einer ersten Steuereinheit (3) und einer zweiten Steuereinheit (4), wobei die Steuereinheiten (3, 4) über zumindest einen Verbindungsweg (6, 7) miteinander verbunden sind, und die erste Steuereinheit (3) gemäß Anspruch 11 ausgebildet ist.

13. Ethernet-Bordnetz nach Anspruch 12,
**dadurch gekennzeichnet, dass**
das Ethernet-Bordnetz (2) eine dritte Steuereinheit (5) aufweist, welche nur indirekt mit der ersten Steuereinheit (3) verbunden ist und über einen dritten Verbindungsweg (8) direkt mit der zweiten Steuereinheit (4) verbunden ist, wobei die dritte Steuereinheit (5) dazu ausgebildet ist, eine Laufzeit (21) eines dritten Signals (22) auf dem dritten Verbindungsweg (8) zu bestimmen, wobei die erste Steuereinheit (3) dazu ausgebildet ist, die Bestimmung der Laufzeit (21) des dritten Signals (22) durch eine Dienstnachricht (20) an die dritte Steuereinheit (5) auszulösen.

14. Computerprogrammprodukt umfassend Befehle, die bei der Ausführung des Programms durch einen Computer diesen veranlassen, das Verfahren (200) nach einem oder mehreren der Ansprüche 1 - 10 auszuführen.

15. Computerlesbareres Medium, auf dem das Computerprogrammprodukt nach Anspruch 14 gespeichert ist.

16. Fahrzeug mit mehreren Steuereinheiten (3, 4, 5) und einem Ethernet-Bordnetz nach 12.

## Claims

1. Method for securing the time synchronization of an Ethernet on-board network (2) of a motor vehicle (1), in which the following steps are carried out:
- determining a delay time (9) of a first signal (10) on a first connecting path (6) between a first control unit (3) of the Ethernet on-board network (2) and a second control unit (4) of the Ethernet on-board network (2);
- determining a maximum speed (11) of the first connecting path (6) on the basis of the delay time (9); and
- determining a type of a transmission medium (12) of the first connecting path (6) on the basis of the maximum speed (11),
**characterized**
**in that** the determination of the delay time (9) of a first signal (10) and the determination of the maximum speed (11) of the first connecting path and the determination of the type of a transmission medium (12) of the first connecting path (6) result in an entropy source being formed that is used to ascertain at least one dynamic key (28) for the connecting path (6) that is used to encrypt a time synchronization message for the connecting path (6).

2. Method according to Claim 1, **characterized in that** the dynamic key (28) for the connecting path (6) is unique per unit time and for each link and in the Ethernet on-board network.

3. Method according to Claim 1 or 2, **characterized in that** the dynamic key (28) for the connecting path (6) is generated by combining a point-to-point line delay and the message frequency.

4. Method according to one of Claims 1 to 3, **characterized in that** the type of the transmission medium (12) is communicated to a program (13) in the Ethernet on-board network (2) and a connecting path selection (14) of the program (13) is adapted according to the type of the transmission medium (12) and the program (13) records all information of the entropy source and the dynamic key (28) for the connecting path (6) is generated.

5. Method according to one of Claims 1 to 3, **characterized in that** the type of the transmission medium (12) is determined as optical, copper or wireless.

6. Method according to one of the preceding claims, **characterized in that** a transmission security value (15), which describes a probability of loss of data transmitted by way of the first connecting path (6), is assigned to the first connecting path (6) on the basis of the type of the transmission medium (12).

7. Method according to one of the preceding claims, **characterized in that** delay times of a plurality of signals on the first connecting path (6) are determined and the fastest delay time of the plurality of signals is selected, the maximum speed (11) of the first connecting path (6) being determined on the basis of the fastest delay time.

8. Method according to one of the preceding claims, **characterized in that** a delay time (16) of a second signal (17) on a second connecting path (7), which is different from the first connecting path (6), between the first control unit (3) and the second control unit (4) is determined, and a maximum speed (11) of the second connecting path (7) is determined, a type of the transmission medium (19) of the second connecting path (7) being determined on the basis of the maximum speed (11) of the second connecting path (7).

9. Method according to one of the preceding claims, **characterized in that** the method is performed after the first control unit (3) changes from a normal operating mode to an energy-saving mode and/or from the energy-saving mode to the normal operating mode.

10. Method according to one of the preceding claims, **characterized in that** the delay time (9) of the first signal (10) is determined using the first control unit (3) and a delay time (21) of a third signal (22) on a third connecting path (8), which is connected to the first control unit (3) only indirectly, between the second control unit (4) and a third control unit (5) of the Ethernet on-board network (2) is determined using the third control unit (5), the determination of the delay time (21) of the third signal (22) being triggered by a service message (20) sent from the first control unit (3) to the third control unit (5).

11. Control unit for an Ethernet on-board network (2), which, as first control unit (3), is designed:
- to send a signal (10) to a second control unit (4) of the Ethernet on-board network (2) and to receive the signal (10) from the second control unit (4);
- to determine a delay time (9) of the signal (10) on a connecting path (6) to the second control unit (4);
- to determine a maximum speed (11) of the connecting path (6) on the basis of the delay time (9); and
- to determine a type of a transmission medium (12) of the connecting path (6) on the basis of the maximum speed (11),
**characterized in that** the control unit (3) comprises at least:
- a microprocessor (402),
- a volatile memory (404) and nonvolatile memory (406),
- at least two communication interfaces (408),
- a synchronizable timer 410,
the nonvolatile memory (406) contains program instructions that, when executed by the microprocessor (402), implement at least one embodiment of the method according to the invention according to Claims 1 to 10 and the entropy source is formed in the volatile and/or nonvolatile memory 404, 406, said entropy source being used to form the dynamic keys (28) for the connecting paths (6).

12. Ethernet on-board network (2) for a motor vehicle (1), having a first control unit (3) and a second control unit (4), wherein the control units (3, 4) are connected to one another by way of at least one connecting path (6, 7), and the first control unit (3) is designed according to Claim 11.

13. Ethernet on-board network according to Claim 12, **characterized in that** the Ethernet on-board network (2) has a third control unit (5), which is connected to the first control unit (3) only indirectly and is connected to the second control unit (4) directly by way of a third connecting path (8), wherein the third control unit (5) is designed to determine a delay time (21) of a third signal (22) on the third connecting path (8), wherein the first control unit (3) is designed to trigger the determination of the delay time (21) of the third signal (22) by way of a service message (20) to the third control unit (5).

14. Computer program product comprising instructions that, when the program is executed by a computer, cause said computer to perform the method (200) according to one or more of Claims 1-10.

15. Computer-readable medium on which the computer program product according to Claim 14 is stored.

16. Vehicle having multiple control units (3, 4, 5) and an Ethernet on-board network according to Claim 12.

## Revendications

1. Procédé permettant de sécuriser la synchronisation temporelle d'un réseau de bord Ethernet (2) d'un véhicule automobile (1), dans lequel les étapes suivantes sont effectuées, consistant à :
- déterminer un temps de propagation (9) d'un premier signal (10) sur une première voie de liaison (6) entre une première unité de commande (3) du réseau de bord Ethernet (2) et une deuxième unité de commande (4) du réseau de bord Ethernet (2) ;
- déterminer une vitesse maximale (11) de la première voie de liaison (6) à l'aide du temps de propagation (9) ; et
- déterminer un type d'un support de transmission (12) de la première voie de liaison (6) à l'aide de la vitesse maximale (11),
**caractérisé en ce que** la détermination du temps de propagation (9) d'un premier signal (10) et la détermination de la vitesse maximale (11) de la première voie de liaison et la détermination du type d'un support de transmission (12) de la première voie de liaison (6) forment une source d'entropie à partir de laquelle est établie au moins une clé dynamique (28) pour la voie de liaison (6) qui est mise en oeuvre pour crypter un message de synchronisation temporelle pour la voie de liaison (6).

2. Procédé selon la revendication 1, **caractérisé en ce que** la clé dynamique (28) pour la voie de liaison (6) est unique par unité de temps et est unique pour chaque lien et dans le réseau de bord Ethernet.

3. Procédé selon la revendication 1 ou 2, **caractérisé en ce qu'**une génération de la clé dynamique (28) pour la voie de liaison (6) est effectuée en combinant un retard de ligne point à point et la fréquence des messages.

4. Procédé selon l'une quelconque des revendications 1 à 3, **caractérisé en ce que** le type de support de transmission (12) est communiqué à un programme (13) dans le réseau de bord Ethernet (2), et une sélection de voie de liaison (14) du programme (13) est adaptée en fonction du type du support de transmission (12), et le programme (13) enregistre toutes les informations de la source d'entropie, et la génération de la clé dynamique (28) est effectuée pour la voie de liaison (6).

5. Procédé selon l'une quelconque des revendications 1 à 3, **caractérisé en ce que** le type de support de transmission (12) est déterminé comme étant optique, en cuivre ou sans fil.

6. Procédé selon l'une quelconque des revendications précédentes, **caractérisé en ce qu'**une valeur de sécurité de transmission (15) qui décrit une probabilité de perte de données transmises sur la première voie de liaison (6) est attribuée à la première voie de liaison (6) à l'aide du type du support de transmission (12).

7. Procédé selon l'une quelconque des revendications précédentes, **caractérisé en ce que** les temps de propagation d'une pluralité de signaux sur la première voie de liaison (6) sont déterminés, et le temps de propagation le plus rapide de la pluralité des signaux est sélectionné, dans lequel la vitesse maximale (11) de la première voie de liaison (6) est déterminée à l'aide du temps de propagation le plus rapide.

8. Procédé selon l'une quelconque des revendications précédentes, **caractérisé en ce qu'**un temps de propagation (16) d'un deuxième signal (17) sur une deuxième voie de liaison (7) différente de la première voie de liaison (6) entre la première unité de commande (3) et la deuxième unité de commande (4) est déterminé, et une vitesse maximale (11) de la deuxième voie de liaison (7) est déterminée, dans lequel un type du support de transmission (19) de la deuxième voie de liaison (7) est déterminé à l'aide de la vitesse maximale (11) de la deuxième voie de liaison (7).

9. Procédé selon l'une quelconque des revendications précédentes, **caractérisé en ce que** le procédé est exécuté après un passage de la première unité de commande (3) d'un mode de fonctionnement normal à un mode basse consommation et/ou du mode basse consommation au mode de fonctionnement normal.

10. Procédé selon l'une quelconque des revendications précédentes, **caractérisé en ce que** le temps de propagation (9) du premier signal (10) est déterminé par la première unité de commande (3), et un temps de propagation (21) d'un troisième signal (22) sur une troisième voie de liaison (8), reliée seulement indirectement à la première unité de commande (3), entre la deuxième unité de commande (4) et une troisième unité de commande (5) du réseau de bord Ethernet (2) est déterminé par la troisième unité de commande (5), dans lequel la détermination du temps de propagation (21) du troisième signal (22) est déclenchée par un message de service (20) envoyé par la première unité de commande (3) à la troisième unité de commande (5).

11. Unité de commande pour un réseau de bord Ethernet (2) qui, en tant que première unité de commande (3), est réalisée pour :
- envoyer un signal (10) à une deuxième unité de commande (4) du réseau de bord Ethernet (2) et recevoir le signal (10) de la deuxième unité de commande (4) ;
- déterminer un temps de propagation (9) du signal (10) sur une voie de liaison (6) jusqu'à la deuxième unité de commande (4) ;
- déterminer une vitesse maximale (11) de la voie de liaison (6) à l'aide du temps de propagation (9) ; et
- déterminer un type d'un support de transmission (12) de la voie de liaison (6) à l'aide de la vitesse maximale (11),
**caractérisée en ce que** l'unité de commande (3) comprend au moins :
- un microprocesseur (402),
- une mémoire volatile (404) et une mémoire non volatile (406),
- au moins deux interfaces de communication (408),
- une horloge 410 pouvant être synchronisée,
dans laquelle la mémoire non volatile (406) contient des instructions de programme qui, lorsqu'elles sont exécutées par le microprocesseur (402), mettent en oeuvre au moins une configuration du procédé selon l'invention selon les revendications 1 à 10, et la source d'entropie est formée dans la mémoire volatile et/ou non volatile 404, 406 à partir de laquelle les clés dynamiques (28) sont formées pour les voies de liaison (6).

12. Réseau de bord Ethernet (2) pour un véhicule automobile (1), comprenant une première unité de commande (3) et une deuxième unité de commande (4), dans lequel les unités de commande (3, 4) sont reliées l'une à l'autre par au moins une voie de liaison (6, 7), et la première unité de commande (3) est réalisée selon la revendication 11.

13. Réseau de bord Ethernet selon la revendication 12, **caractérisé en ce que** le réseau de bord Ethernet (2) présente une troisième unité de commande (5) qui est reliée à la première unité de commande (3) seulement indirectement, et qui est reliée directement à la deuxième unité de commande (4) par l'intermédiaire d'une troisième voie de liaison (8), dans lequel la troisième unité de commande (5) est réalisée pour déterminer un temps de propagation (21) d'un troisième signal (22) sur la troisième voie de liaison (8), dans lequel la première unité de commande (3) est réalisée pour déclencher la détermination du temps de propagation (21) du troisième signal (22) par un message de service (20) destiné à la troisième unité de commande (5).

14. Produit de programme informatique, comprenant des instructions qui lors de l'exécution du programme par un ordinateur font que celui-ci exécute le procédé (200) selon une ou plusieurs des revendications 1 à 10.

15. Support lisible par ordinateur, sur lequel est stocké le produit de programme informatique selon la revendication 14.

16. Véhicule, comprenant plusieurs unités de commande (3, 4, 5) et un réseau de bord Ethernet selon la revendication 12.
